# EUROPEAN PATENT APPLICATION

(11) **EP 4 843 704 A1**
(43) Date of publication of application: **25.11.2026**
(21) Application number: 24918587.7
(22) Date of filing: 19.01.2024
(51) Int. Cl.: B23Q 11/00, B23Q 17/00, B23Q 17/20, G05B 19/18

(54) **LOG DATA PROCESSING DEVICE, MACHINING SYSTEM, AND MEASUREMENT SYSTEM**

(71) Applicant: NIKON CORPORATION, Tokyo 140-8601 (JP)
(72) Inventor: SAKURAI, Takuya, Tokyo 108-6290 (JP); YASUBA, Koichi, Tokyo 108-6290 (JP); SEKI, Norie, Tokyo 108-6290 (JP)
(74) Representative: Hoffmann Eitle
(86) International application number: PCT/JP2024/001549
(87) International publication number: WO 2025/154298

(57) **Abstract**

A log data processor that processes log data outputted from a processing device that processes a plurality of targets in sequence is configured to include a processing circuit configured to enable identification of first and second partial log data from the log data. The first partial log data relates to processing a first target among the plurality of targets, and the second partial log data relates to processing a second target different from the first target among the plurality of targets.

## Description

### FIELD

The present disclosure relates to a log data processor, a processing system, and a measurement system for processing log data in processing a plurality of targets.

### BACKGROUND

Patent Literature 1 describes an example of a processing device that processes an object. One of technical problems of such a processing device is to acquire log data appropriately.

### CITATION LIST

### PATENT LITERATURE

Patent Literature 1: U.S. Patent Application Publication No. 2015/0034266

### SUMMARY

A log data processor according to the present disclosure includes a processing circuit configured to enable identification of first and second partial log data from log data including time-series values related to at least one of a processing device that processes a plurality of targets in sequence and the plurality of targets to be processed; the first partial log data relates to processing a first target among the plurality of targets, and the second partial log data relates to processing a second target different from the first target among the plurality of targets.

A log data processor according to the present disclosure includes a processing circuit configured to identify pieces of processing partial log data corresponding to processing any of a plurality of targets from log data including time-series values related to at least one of a processing device that processes the plurality of targets in sequence and the plurality of targets to be processed.

A log data processor according to the present disclosure includes a processing circuit configured to output first and second partial log data from log data including time-series values related to at least one of a processing device that processes a plurality of targets in sequence and the plurality of targets to be processed; the first partial log data relates to processing a first target among the plurality of targets, and the second partial log data relates to processing a second target different from the first target among the plurality of targets.

A log data processor according to the present disclosure processes data sequentially output from a processing device that processes a plurality of targets held by a holder in sequence. The log data processor according to the present disclosure includes a processing circuit configured to output a first portion of the data related to processing a first target among the plurality of targets and a second portion of the data related to processing a second target different from the first target among the plurality of targets as first and second partial log data, respectively.

### BRIEF DESCRIPTION OF DRAWINGS

FIG. 1 schematically illustrates the overall configuration of a processing system.
FIG. 2 schematically illustrates the general configuration of a control device.
FIG. 3 is a block diagram showing the configuration of a processing device included in the processing system.
FIG. 4 schematically illustrates an example of processing by the processing device.
FIG. 5 schematically illustrates an example of arrangement of targets in the processing device.
FIG. 6A schematically illustrates a first state in a first example of movement of a processing head.
FIG. 6B schematically illustrates a second state in a first example of movement of a processing head.
FIG. 6C schematically illustrates a third state in a first example of movement of a processing head.
FIG. 7A schematically illustrates a first state in a second example of movement of a processing head.
FIG. 7B schematically illustrates a second state in a second example of movement of a processing head.
FIG. 8 illustrates an example of time-series values included in log data.
FIG. 9 schematically illustrates the general configuration of a log data processor.
FIG. 10 illustrates an example of information included in a processing report output by the log data processor.
FIG. 11 is a flowchart of a log data process.
FIG. 12 is a flowchart showing the flow of an operation of molten pool feedback control.
FIG. 13 illustrates a molten pool image.
FIG. 14 illustrates molten pool images acquired as time-series data and a combined image.

### DESCRIPTION OF EMBODIMENTS

A log data processor, a processing system, and a measurement system according to the present disclosure will now be described in detail with reference to the drawings.

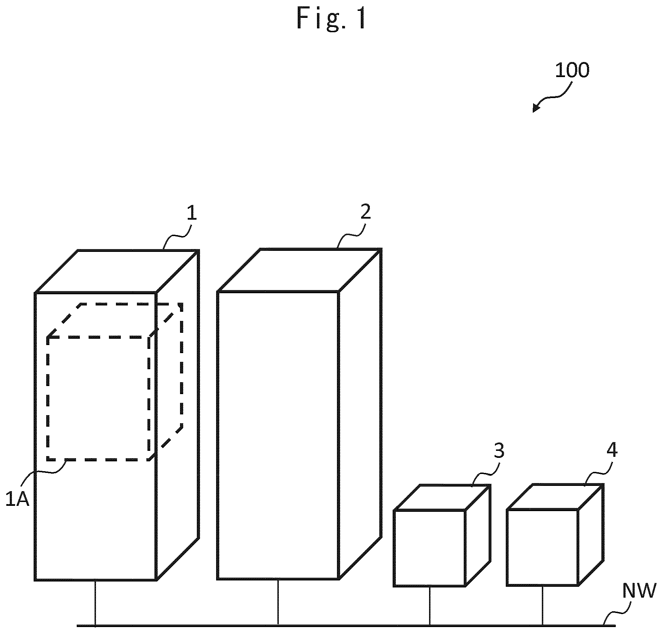

FIG. 1 schematically illustrates the overall configuration of a processing system 100.

In the present embodiment, the processing system 100 includes a processing device 1, a measuring device 2, a control device 3, and a log data processor 4. The processing device 1 and the measuring device 2 are communicably connected to the control device 3 and the log data processor 4 via a communication network NW. The communication network NW includes a wired local-area network. The communication network NW may include a wireless local-area network, a wireless wide-area network, or other communication network. The numbers of processing devices 1, measuring devices 2, control devices 3, and log data processors 4 included in the processing system 100 are not limited to one, and may be two or more. These numbers need not be the same.

The processing device 1 can process each of a plurality of targets included in a workpiece W. The processing device 1 may be configured to be capable of performing at least one of various types of processing on targets, including cutting, welding, screwing, polishing, and painting.

The processing device 1 of the present embodiment performs additive processing on targets of a workpiece W. More specifically, the processing device 1 adds a material to a target on the surface of a workpiece W to form an object on the workpiece W. An object formed on the surface of a workpiece W by the processing device 1 may be, for example, a three-dimensional structure ST having a size in any of the three-dimensional directions. The three-dimensional structure ST may be integrated with or separable from the workpiece W.

The processing device 1 may perform additive processing, using any method of additive processing that enables forming an object. Examples of the method of additive processing include laser metal deposition (LMD), powder bed fusion such as selective laser sintering (SLS), binder jetting, material jetting, stereolithography, and laser metal fusion (LMF). Laser metal deposition may be referred to as directed energy deposition (DED).

The processing device 1 may be configured to be capable of performing subtractive processing on a workpiece W, in addition to or instead of performing additive processing. More specifically, the processing device 1 may be capable of performing subtractive processing to remove a portion of a workpiece W. In addition to or instead of performing subtractive processing on a workpiece W, the processing device 1 may perform subtractive processing on an object formed on the workpiece W by the processing device 1. The processing device 1 may perform subtractive processing to repair a workpiece W that is a repair-requiring product. The processing device 1 may perform repair by subtractive processing in combination with repair by additive processing.

The processing device 1 includes a chamber space 1A capable of housing a workpiece W for processing. A workpiece W is housed in the chamber space 1A prior to processing, and is taken out of the chamber space 1A after completion of the processing.

A workpiece W includes a plurality of targets to be processed. The processing device 1 processes a plurality of targets included in a workpiece W in sequence. The targets may be included in target objects, respectively, or may be different portions of a single target object. In this case, the different portions may have the same function. The targets may be portions of the respective target objects. The target objects may be articles of the same type (e.g., turbine blades, propeller blades of a windmill or an electric fan, or thrusters).

The measuring device 2 measures a workpiece W before the processing device 1 starts processing the workpiece W. In the present embodiment, the measuring device 2 measures the three-dimensional shape of a workpiece W. The measuring device 2 includes a measurement space (not shown) capable of housing a workpiece W for measurement. A workpiece W is housed in the measurement space prior to measurement. By measuring the three-dimensional shape of a workpiece W, the measuring device 2 can identify the position of the workpiece W (e.g., the position of the surface of the workpiece W) in three-dimensional space in the measurement coordinate system of the measuring device 2. Thus, it can be said that measuring the three-dimensional shape of a workpiece W is substantially equivalent to measuring the position of the workpiece W.

The measuring device 2 further generates processing control information. The processing control information is control information used to control the processing device 1 so as to process the workpiece W. For example, the processing control information may include processing path information. The processing path information may indicate a target movement path that is a path of a target irradiation position to be irradiated with processing light EL to process the workpiece W. This target movement path may be referred to as a processing path or a tool path. In this case, the measuring device 2 may generate a G-code indicating a processing path or a tool path as processing control information. The measuring device 2 may generate a data file with an extension such as gcode or gco as processing control information. Processing control information generated by the measuring device 2 is transmitted from the measuring device 2 to the processing device 1 via the communication network NW.

The processing device 1 receives (i.e., acquires) processing control information transmitted from the measuring device 2. The processing device 1 that has received processing path information processes a workpiece W, based on the received processing control information. Thus, after the measuring device 2 measures the three-dimensional shape of a workpiece W, the workpiece W is transported from the measuring device 2 to the processing device 1. Specifically, the workpiece W is taken out of the measurement space of the measuring device 2 and transported to the processing device 1. For example, the workpiece W may be transported from the measuring device 2 to the processing device 1 by a transport device (not shown). The workpiece W may be transported from the measuring device 2 to the processing device 1 by a user of the processing system 100 (i.e., by means different from a transport device). In other words, the processing system 100 need not include a transport device. The workpiece W transported to the processing device 1 is installed (i.e., placed or attached) in the chamber space 1A of the processing device 1. This allows the processing device 1 to process the workpiece W.

In the example shown in FIG. 1, the processing system 100 includes a processing device 1 and a measuring device 2 that are different devices. However, the processing system 100 may include a device into which the processing device 1 and the measuring device 2 are integrated. In other words, the processing device 1 and the measuring device 2 may be integrated. In this case, the measurement space and the chamber space 1A at least overlap.

The control device 3 controls the operation of the whole processing system 100. For example, the control device 3 may control the operation of the processing device 1. The control device 3 may further control the operation of the measuring device 2.

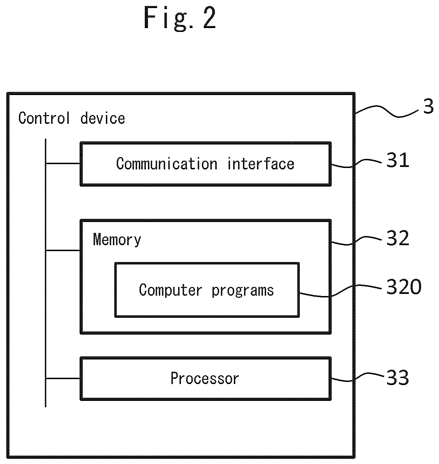

FIG. 2 schematically illustrates the general configuration of the control device 3. The control device 3 is a computer including a communication interface 31, a memory 32, and a processor 33. The control device 3 performs a predetermined operation such as transmitting a signal to the processing device 1 via the communication interface 31 and the communication network NW by the processor 33 executing a computer program 320 stored in the memory 32.

The control device 3 can be configured as an edge server. In this case, the control device 3 is communicably connected to at least one of the processing device 1 and the measuring device 2 via the communication network NW. Alternatively, the control device 3 can be configured as a cloud server. In this case, the control device 3 is communicably connected to at least one of the processing device 1 and the measuring device 2 via the communication network NW and the Internet (not shown).

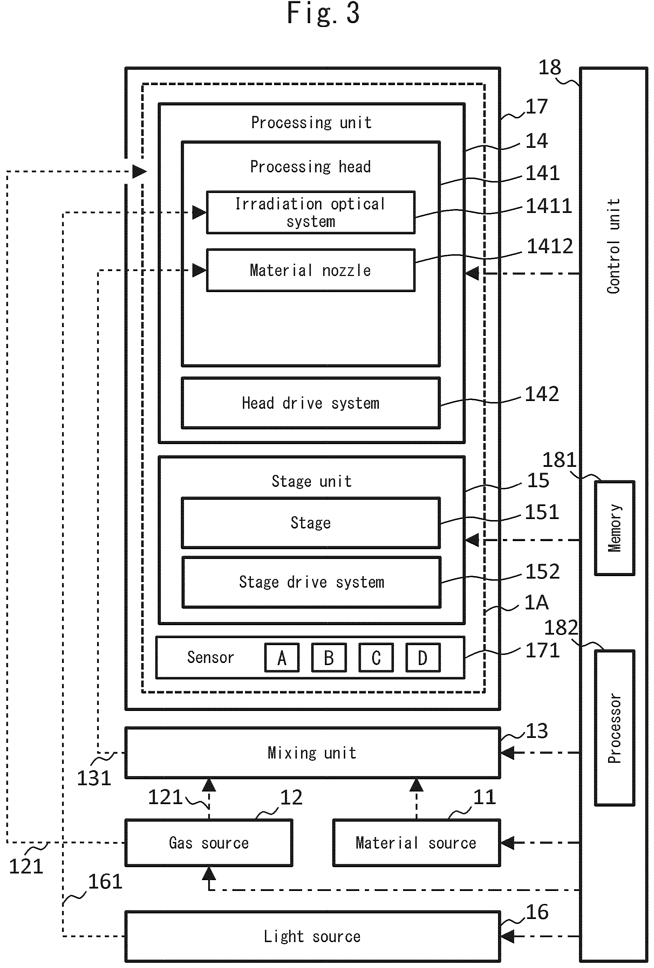

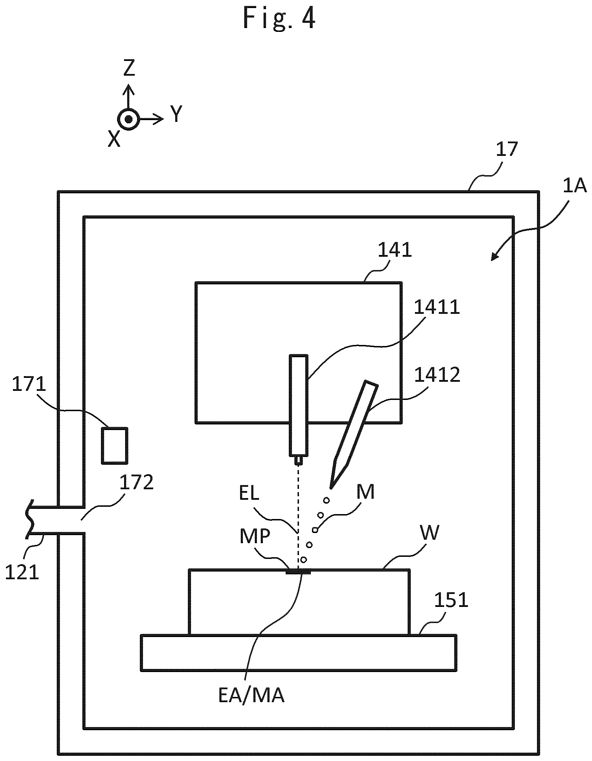

FIG. 3 is a block diagram showing the configuration of the processing device 1 included in the processing system 100; FIG. 4 schematically illustrates an example of processing by the processing device 1.

The processing device 1 included in the processing system 100 of the present embodiment described below is a processing device that performs additive processing, using laser metal deposition.

The following describes the positional relationship between various components constituting the processing device 1, using an XYZ Cartesian coordinate system defined by mutually perpendicular X-, Y-, and Z-axes as a processing coordinate system. In the following description, it is assumed that the X- and Y-axis directions are horizontal directions (i.e., predetermined directions in a horizontal plane), and that the Z-axis direction is a vertical direction (i.e., a direction perpendicular to the horizontal plane, substantially an up-and-down direction), for convenience of description. The directions of rotation around the X-, Y-, and Z-axes (i.e., inclined directions) are referred to as θX, θY, and θZ directions, respectively. The Z-axis direction may be the direction of gravity. The XY plane may be horizontal directions.

The processing device 1 processes a forming material M, using processing light EL, to perform additive processing on a workpiece W. The forming material M is a material that can be melted by irradiation with processing light EL stronger than a predetermined intensity. As such a forming material M, for example, at least one of a metallic material and a resin material can be used. However, other materials different from metallic materials and resin materials may be used as the forming material M. The forming material M is a powdery or granular material. In other words, the forming material M is a particulate material. However, the forming material M need not be a particulate material. For example, at least one of a wire-like material and a gaseous material may be used as the forming material M. In additive processing based on the DED method, the processing device 1 supplies a forming material M near the focus of processing light EL, and causes the forming material M melted by irradiation with the processing light EL to adhere to a target or supplies the forming material M to a molten pool formed on a target by the processing light EL, melts the forming material M, and then cools and solidifies the forming material M. In this way, an object is formed on a workpiece W.

The processing device 1 sequentially forms structural layers, using laser metal deposition, to form a three-dimensional structure ST in which the structural layers are stacked. First, the processing device 1 sets the surface of a workpiece W as a forming surface for actually forming an object, and forms a first structural layer on the forming surface. The processing device 1 then sets the surface of the first structural layer as a new forming surface, and forms a second structural layer on this forming surface. By repeating the same operation thereafter, the processing device 1 can form a three-dimensional structure in which multiple structural layers are stacked.

The processing device 1 includes a material source 11, a gas source 12, a mixing unit 13, a processing unit 14, a stage unit 15, a light source 16, and a control unit 18. The processing device 1 also includes a housing 17 having the chamber space 1A therein. The processing unit 14 and the stage unit 15 are housed in the chamber space 1A. However, at least one of the processing unit 14 and the stage unit 15 need not be housed in the chamber space 1A. The processing unit 14 may be attached to the tip of a robot arm.

The material source 11 supplies a forming material M required for the processing unit 14 to perform additive processing. In order that the processing unit 14 can supply an amount of forming material M required per unit time to perform additive processing, the material source 11 supplies a corresponding predetermined amount of forming material M to the mixing unit 13 described below.

The gas source 12 supplies an inert gas such as nitrogen or argon. The inert gas supplied by the gas source 12 is supplied to the mixing unit 13 via a supply pipe 121, mixed with the forming material supplied from the material source 11, and then supplied to the processing unit 14. The inert gas supplied by the gas source 12 is also supplied to the chamber space 1A via a supply pipe 121 connecting the gas source 12 to a supply port 172 formed in the housing 17. This results in the chamber space 1A being filled with the inert gas. The inert gas supplied by the gas source 12 is used to purge the chamber space 1A, and thus may also be referred to as a purge gas. The inert gas supplied to the chamber space 1A may be discharged from a discharge port (not shown) formed in the housing 17. The gas source 12 is a gas cylinder containing an inert gas. When the inert gas is nitrogen gas, the gas source 12 may be a nitrogen gas generator that generates nitrogen gas, using air as a raw material.

The mixing unit 13 mixes the forming material M supplied from the material source 11 and the inert gas supplied from the gas source 12 as a transport gas (also referred to as a pumping gas), and pumps them into the processing unit 14 via a supply pipe 131. As the pumping gas, a gas supplied from a gas source different from the gas source 12 may be used. The forming material M may be supplied from the material source 11 directly to the processing unit 14 without being mixed with a pumping gas. In this case, the processing device 1 need not include the mixing unit 13.

The processing unit 14 processes the forming material supplied from the material source 11 to perform additive processing to form an object on a workpiece W. To perform additive processing, the processing unit 14 includes a processing head 141 and a head drive system 142. Further, the processing head 141 includes an irradiation optical system 1411 and a material nozzle 1412. The processing head 141 includes a single irradiation optical system 1411 in the example shown in FIGs. 3 and 4, but may include multiple irradiation optical systems 1411. The processing head 141 includes a single material nozzle 1412 in the example shown in FIGs. 3 and 4, but may include multiple material nozzles 1412.

The irradiation optical system 1411 is an optical system for emitting processing light EL (e.g., a condensing optical system). Specifically, the irradiation optical system 1411 is optically connected to the light source 16 that emits processing light EL, via an optical transmission member 161 such as an optical fiber or a light pipe. The irradiation optical system 1411 emits processing light EL propagating from the light source 16 via the optical transmission member 161. The irradiation optical system 1411 radiates the processing light EL downward (i.e., toward the -Z side).

Under the irradiation optical system 1411 is disposed a stage 151. When a workpiece W is placed on the stage 151, the irradiation optical system 1411 irradiates the workpiece W with processing light EL. Specifically, the irradiation optical system 1411 can radiate processing light EL onto a target irradiation area EA set on or near the workpiece W as a region into which processing light EL is radiated (typically, condensed). In addition, the state of the irradiation optical system 1411 can be switched, under the control of the control unit 18, between a state in which the target irradiation area EA is irradiated with processing light EL and a state in which the target irradiation area EA is not irradiated with processing light EL.

The material nozzle 1412 supplies (e.g., ejects, jets, squirts, or sprays) the forming material M. The material nozzle 1412 is physically connected to the material source 11, which is a source of the forming material M, via the supply pipe 131 and the mixing unit 13. The material nozzle 1412 supplies the forming material M supplied from the material source 11. The forming material M from the material source 11 may be mixed with a pumping gas by the mixing unit 13 and then pumped to the material nozzle 1412 via the supply pipe 131. In this case, the material nozzle 1412 supplies the forming material M together with the pumping gas. The pumping gas may be a purge gas supplied from the gas source 12 to purge the chamber space 1A.

The material nozzle 1412 supplies the forming material M downward (i.e., toward the -Z side). Under the material nozzle 1412 is disposed the stage 151. When a workpiece W is placed on the stage 151, the material nozzle 1412 supplies the forming material M toward the workpiece W or the vicinity of the workpiece W.

In the processing device 1 of the present embodiment, the material nozzle 1412 supplies the forming material M to the position irradiated with processing light EL (i.e., the target irradiation area EA irradiated with processing light EL from the irradiation optical system 1411). Thus the material nozzle 1412 and the irradiation optical system 1411 are positioned so that a target supply area MA set on or near the workpiece W as a region to which the material nozzle 1412 supplies the forming material M coincides (or at least overlaps) with the target irradiation area EA. In this case, the forming material M supplied from the material nozzle 1412 is irradiated with processing light EL emitted by the irradiation optical system 1411. This results in the forming material M supplied from the material nozzle 1412 melting, causing a molten pool MP including the melted forming material M to be formed on the workpiece W.

The material nozzle 1412 may supply the forming material M to a molten pool MP formed by processing light EL emitted by the irradiation optical system 1411. For example, the processing device 1 may supply the forming material M to a molten pool MP formed by melting a material on the surface of the workpiece W by irradiation of the workpiece W with processing light EL. Alternatively, the processing device 1 may melt the forming material M supplied from the material nozzle 1412, using processing light EL, before the forming material M reaches the workpiece W, and cause the melted forming material M to adhere to the workpiece W.

It can be said that the irradiation optical system 1411 included in the processing head 141 supplies processing light EL to process a workpiece W. It can be said that the material nozzle 1412 included in the processing head 141 supplies a forming material M to process a workpiece W. Further, it can be said that the material nozzle 1412 supplies a pumping gas to process a workpiece W. Thus the processing head 141 can supply at least one of processing light EL, a forming material M, and a pumping gas to process a workpiece W.

The head drive system 142 moves the processing head 141 under the control of the control unit 18. In other words, the head drive system 142 moves the irradiation optical system 1411 and the material nozzle 1412 under the control of the control unit 18. The head drive system 142 moves the processing head 141, for example, along at least one of the X-, Y-, and Z-axes and the θX, θY, and θZ directions. Movement of the processing head 141 by the head drive system 142 changes the relative positions of the processing head 141, the stage 151, and a workpiece W placed on the stage 151. This results in a target irradiation area EA and a target supply area MA (and further a molten pool MP) moving relative to the workpiece W.

The head drive system 142 may move the processing head 141 above a height at which targets are processed (i.e., toward the +Z side) between processing one target on a workpiece W and processing another target. This movement of the processing head 141 by the head drive system 142 allows for avoiding interference between the processing head 141 and the workpiece W or an object formed on the workpiece W when the processing head 141 moves from a processing position for processing one target to a processing position for processing another target.

The stage unit 15 includes a stage 151 and a stage drive system 152.

On the stage 151 is placed a workpiece W. When a workpiece W is placed, it is preferable that the upper surface (also referred to as an installation surface) of the stage 151 be horizontal. The stage 151 is capable of supporting a workpiece W placed on the stage 151. The stage 151 may be capable of holding a workpiece W placed on the stage 151. In this case, the stage 151 may include at least one of a mechanical chuck, an electrostatic chuck, a vacuum chuck, or the like to hold a workpiece W. Alternatively, the stage 151 may be incapable of holding a workpiece W placed on the stage 151. In this case, a workpiece W may be placed on the stage 151 without being clamped. Alternatively, a workpiece W may be held by a holder such as a jig, and the holder to which the workpiece W is attached may be placed, supported, or held on the stage 151. Alternatively, the stage 151 may include a gripping portion that grips a workpiece W. In this case, multiple gripping portions may be provided to grip at least two of a plurality of targets included in a workpiece W. The workpiece W need not be placed on the stage 151, and may be placed, for example, on the floor.

The stage drive system 152 moves the stage 151 under the control of the control unit 18. The stage drive system 152 moves the stage 151, for example, along at least one of the X-, Y-, and Z-axes and the θX, θY, and θZ directions. Movement of the stage 151 by the stage drive system 152 changes the relative positions of the processing head 141, the stage 151, and a workpiece W placed on the stage 151. This results in a target irradiation area EA and a target supply area MA (and further a molten pool MP) moving relative to the workpiece W.

When the stage drive system 152 moves the stage 151 along at least one of the θX, θY, and θZ directions, the installation surface may be inclined from the horizontal. In the present disclosure, the term "installation surface" used without any particular explanation for inclination means an installation surface (typically, horizontal) on which a workpiece W is placed.

The light source 16 emits, for example, at least one of infrared light, visible light, and ultraviolet light as processing light EL. The light source 16 may emit other types of light as processing light EL. The processing light EL may also be referred to as a beam. The processing light EL may include at least one pulse of light. The processing light EL may include at least one continuous wave (CW). The processing light EL may be laser light. In this case, the light source 16 may include a laser light source such as a semiconductor laser, e.g., a laser diode (LD), a fiber laser, a CO₂ laser, a YAG laser, or an excimer laser. However, the processing light EL need not be laser light. The light source 16 may include any light source, such as a light-emitting diode (LED) or a discharge lamp.

The housing 17 has a chamber space 1A therein that can house the processing unit 14 and the stage unit 15. The housing 17 includes a sensor 171 inside the chamber space 1A. The sensor 171 may include at least one of a workpiece temperature sensor 171A, a light intensity sensor 171B, an internal temperature sensor 171C, and an oxygen concentration sensor 171D. The sensor 171 is an example of a sensor included in the processing system. The sensor 171 outputs values related to at least one of the processing device 1 and the workpiece W in chronological order. It can also be said that output of values related to at least one of the processing device 1 and the workpiece W by the sensor 171 is measurement of at least one of the processing device 1 and the workpiece W by the sensor 171. The sensor 171 may output values discretely or continuously.

The sensor 171 may be provided in the processing head 141 or at an appropriate place in the housing 17. The appropriate place in the housing 17 may be on the stage 151. When the sensor 171 is provided in the processing head 141, the sensor 171 moves with the processing head 141. When the sensor 171 is provided at an appropriate place in the housing 17, the sensor 171 may be movable to an appropriate position depending on the position of the processing head 141 by a sensor movement system. When the sensor 171 is moved with the processing head 141, the destination of the sensor 171 may be the destination of the processing head 141, the position of the processing head 141 before movement, or a position different from them.

As the values related to the workpiece W, the sensor 171 may output a value representing a characteristic related to processing by irradiation of the workpiece W with a beam. For example, the sensor 171 may be a workpiece temperature sensor 171A that outputs a value representing the temperature of the workpiece W. For example, the sensor 171 may be a sensor that outputs a value representing the amount of the forming material M supplied or the amount of the inert gas supplied.

The sensor 171 may include a sensor capable of acquiring data for calculating the area of a molten pool MP. It can be said that the sensor 171 indirectly outputs the amount of processing light EL by calculating the area of a molten pool MP. In this case, the height of a three-dimensional structure ST added to the workpiece W may be measured by configuring the sensor so as to observe the molten pool obliquely.

The sensor 171 may output a value representing a characteristic related to processing light EL with which the workpiece W is irradiated. For example, the sensor 171 may be a light intensity sensor 171B that outputs a value representing the amount of processing light EL emitted from the irradiation optical system 1411. The light intensity sensor may output a value representing the amount of light split from the processing light EL by an optical path splitter included in the irradiation optical system 1411.

The light intensity sensor 171B may be a sensor that measures the amount of return light reflected and returning from the workpiece W, or may be a sensor that measures the amount of light of a processing laser itself. The sensor that measures the amount of light of a processing laser itself may be provided near the outlet of the light source 16.

As the values related to the processing device 1, the sensor 171 may output a value related to environment in the processing device 1. The value related to environment in the processing device 1 may be a value related to environment inside the chamber space 1A of the processing device 1. The sensor 171 may output a value related to the gas inside the chamber space 1A of the processing device 1. The sensor 171 may be, for example, an internal temperature sensor 171C that outputs a value representing a temperature inside the chamber space 1A. The sensor 171 may be, for example, an oxygen concentration sensor 171D that outputs a value representing an oxygen concentration inside the chamber space 1A.

When the sensor 171 provided in the processing head 141 outputs values discretely, the head drive system 142 may move the processing head 141 so that the sensor 171 outputs values when the processing head 141 is above a height at which targets are processed (i.e., on the +Z side). It can also be said that before processing by the processing head 141, the head drive system 142 moves the sensor 171 in a direction in which the distance from the workpiece W increases. By the head drive system 142 moving the processing head 141 in this way, the distance between a target of measurement and the sensor 171 during measurement can be set to an appropriate distance. The height to which the processing head 141 is moved when the sensor 171 outputs a value is preferably less than a height at which the processing head 141 is moved from a processing position for processing one target to a processing position for processing another target (i.e., on the -Z side).

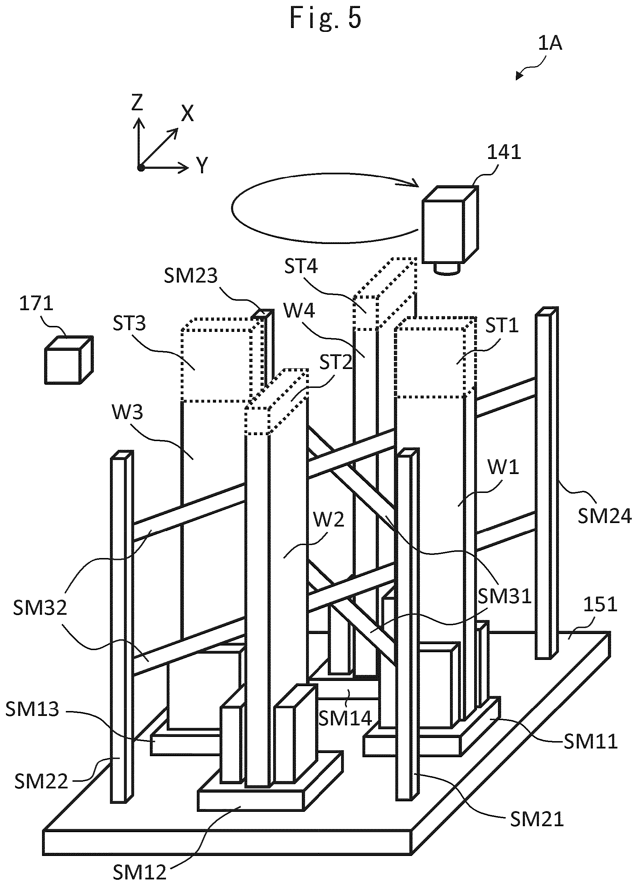

FIG. 5 schematically illustrates an example of arrangement of targets in the processing device 1. In the example of FIG. 5, the workpiece W includes targets W1-4. The targets W1-4 may also be referred to as target objects. The targets W1-4 may be articles of the same type. On the targets W1-4 are formed three-dimensional structures ST1-4, respectively.

The targets W1-4 may be a workpiece W that is a repair-requiring product having a defective portion. In this case, the processing device 1 may perform repair processing to repair (or restore) the repair-requiring product by performing additive processing to form an object to fill the defective portion. In other words, the additive processing performed by the processing device 1 may include additive processing of adding, to the workpiece W, a three-dimensional structure ST corresponding to an object for filling the defective portion. An example of the repair-requiring product having a defective portion is a worn turbine blade.

The targets W1-4 may be a workpiece W serving as a base for forming a three-dimensional structure ST. In this case, the processing device 1 may perform additive processing to form a three-dimensional structure ST on the workpiece W, thereby producing from scratch (i.e., creating) the three-dimensional structure ST. As an example, the processing device 1 may perform additive processing to form a three-dimensional structure ST corresponding to a turbine blade on a workpiece W, thereby creating a turbine blade.

The targets W1-4 may be a workpiece W that is an intermediate product produced in the process of forming a three-dimensional structure ST. In this case, the processing device 1 may perform additive processing to finish a three-dimensional structure ST on a workpiece W that is an intermediate product of a three-dimensional structure ST, thereby producing a three-dimensional structure ST from the intermediate product. As an example, the processing device 1 may perform additive processing to finish a turbine blade on a workpiece W that is an intermediate turbine blade, thereby producing a finished turbine blade from the intermediate turbine blade.

Each of the targets W1-4 is placed on the stage 151 inside the chamber space 1A. The stage 151 is equipped with holders SM11-14, SM21-24, and SM31-32 configured to hold the targets W1-4.

The holders SM11-14 each include a support bottom portion that supports the respective targets W1-4 on the upper surface of the stage 151, and a pair of gripping portions that grips the respective targets W1-4 on the upper surface of the support bottom portion to prevent them from falling sideways. The gripping portion of the holder SM11 is an example of a first gripping portion; the gripping portion of the holder SM12 is an example of a second gripping portion.

The holders SM21-24 each have a first height (size in the Z-axis direction) on the upper surface of the stage 151. The holders SM31-32 each connect a pair of holders among the holders SM21-24 to each other at a second height less than the first height. The pairs of holders may be selected so that the holders SM31-32 cross. The holders SM31-32 connected to the holders SM21-24 can restrict the range of movement of the targets W1-4 placed on the stage 151 and hold the targets W1-4.

In the chamber space 1A, after completion of processing the targets W1 and W2 held by the holders SM11 and SM12, respectively, the holders SM11 and SM12 may each hold another target for processing.

The processing head 141 moves at least in the X- and Y-axis directions, for example, to process the target W2 after processing the target W1. The processing head 141 may move in the Z-axis direction in addition to the X- and Y-axis directions, for example, to process the target W2 after processing the target W1.

The processing device 1 may start processing, for example, from the target W1, and start processing the target W2 after forming a three-dimensional structure ST1 on the target W1. Alternatively, the processing device 1 may start processing, for example, a lowest position (on the -Z side) in the targets W1-4, and after processing a portion of that height of one target is finished, the processing head may move to another target and process a portion of that height, and increase the height of portions to be processed (toward the +Z side) while moving between the targets. In this case, it can be said that the processing device 1 processes a processing surface located at a predetermined height from the upper surface of the stage 151 on which the targets are placed (i.e., an installation surface).

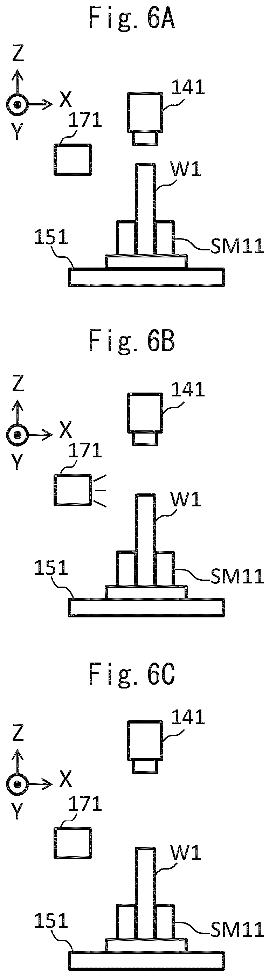

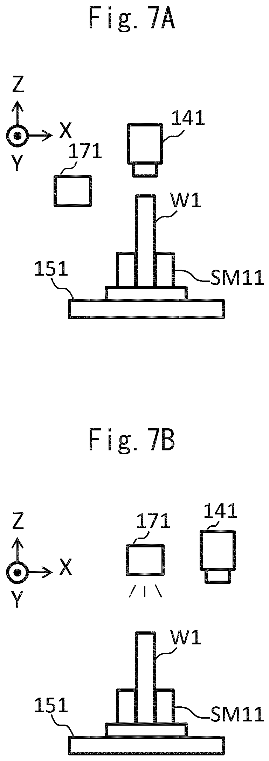

FIGs. 6A-6C schematically illustrates states in a first example of movement of the processing head 141; FIGs. 7A-7B schematically illustrates states in a second example of movement of the processing head 141.

In the first example of movement of the processing head 141, the sensor 171 is fixed to a predetermined position in the housing 17. The first state shown in FIG. 6A corresponds to a state in which the target W1 is being processed by the processing head 141. The second state shown in FIG. 6B corresponds to a state in which measurement is being performed by the sensor 171. The sensor 171 measures, for example, the temperature of the target W1. In the second state, no processing is performed by the processing head 141. The third state shown in FIG. 6C corresponds to a state in which the position of the processing head 141 is changed to process a target different from the target W1. In the third state, no processing is performed by the processing head 141.

In the second state, the processing head 141 is moved upward (in the +Z direction) so as not to obstruct measurement by the sensor 171. In the third state, the processing head 141 is also moved upward (in the +Z direction) so as not to come into contact with an object in the chamber space 1A such as a holder or another target. The amount by which the processing head 141 is moved upward (in the +Z direction) in the second state may be less than the amount by which the processing head 141 is moved upward (in the +Z direction) in the third state. When processing of the target W1 is performed for each layer and measurement by the sensor 171 is performed similarly for each layer, setting the amount of movement of the processing head 141 in the second state less than the amount of movement in the third state allows for reducing the distance moved and shortening the processing time. In this case, since the movement in the third state is less frequent than the movement in the second state, the processing device 1 may be operated more safely by moving the processing head 141 further upward (in the +Z direction) in the third state.

In the second example of movement of the processing head 141, the sensor 171 is movably installed at a predetermined position in the housing 17. The first state shown in FIG. 7A corresponds to a state in which the target W1 is being processed by the processing head 141. The second state shown in FIG. 7B corresponds to a state in which measurement is being performed by the sensor 171. The sensor 171 measures, for example, the temperature of the target W1. In the second state, the processing head 141 moves upward (in the +Z direction) and to the right (in the +X direction). The direction of this movement is not limited to the +X direction, and may be any direction as long as the processing head 141 moves away from the position on the XY plane at which the target W1 is processed. The sensor 171 moves to the position on the XY plane from which the processing head 141 is moved, and performs measurement.

The control unit 18 controls the operation of the processing device 1. For example, the control unit 18 may control the processing unit 14 (e.g., at least one of the processing head 141 and the head drive system 142) to process each of a plurality of targets in a workpiece W. The control unit 18 may also control the stage unit 15 (e.g., the stage drive system 152) so that each of a plurality of targets in a workpiece W can be processed by the processing unit 14.

To control the operation of the processing device 1, the control unit 18 outputs processing control information. The processing control information may be received from the control device 3. The processing device 1 processes the workpiece W according to the processing control information. For example, after processing a first target, the processing device 1 processes a second target according to the processing control information. For example, after processing the second target, the processing device 1 further processes the first target according to the processing control information.

The control unit 18 may include, for example, a memory 181 and a processor 182. The processor 182 includes, for example, a central processing unit (CPU). The processor 182 may further include a graphics processing unit (GPU). The memory 181 includes, for example, a memory. The control unit 18 functions as a unit that controls the operation of the processing device 1 by the processor 182 executing a computer program. This computer program causes the processor 182 to perform (i.e., execute) an operation to be performed by the control unit 18 to control the operation of the processing device 1. In other words, this computer program causes the control unit 18 to function so as to cause the processing device 1 to perform an operation for processing a workpiece W. The computer program executed by the processor 182 may be stored in a storage device (i.e., a storage medium) included in the control unit 18 or in any storage medium built in the control unit 18 or externally attachable to the control unit 18 (e.g., a hard disk drive or a semiconductor memory). Alternatively, the processor 182 may download a computer program to be executed from a device external to the control unit 18 via a communication interface included in the control unit 18.

The control unit 18 may control mode of emission of processing light EL by the irradiation optical system 1411. The mode of emission may include, for example, at least one of the intensity and emission timing of processing light EL. When the processing light EL includes at least one pulse of light, the mode of emission includes, for example, at least one of the emission time of each pulse, the emission cycle of each pulse, and the ratio between the lengths of the emission time and the emission cycle of each pulse ("duty ratio"). The control unit 18 may control mode of movement of the processing head 141 by the head drive system 142. The control unit 18 may control mode of movement of the stage 151 by the stage drive system 152. The mode of movement includes, for example, at least one of the amount, speed, direction, and timing (time) of movement. The control unit 18 may control mode of supply of the forming material M by the material nozzle 1412. The mode of supply includes, for example, at least one of the amount of the forming material M supplied (in particular, the amount supplied per unit time) and the supply timing (supply time).

The control unit 18 can output log data including time-series values related to at least one of the processing device 1 and a workpiece W. For example, the control unit 18 may include a communication interface and transmit the log data to a device external to the processing device 1 via the communication interface. The device external to the processing device 1 may be the control device 3 or the log data processor 4 communicably connected to the processing device 1 via the communication network NW, or may be another device. For example, the control unit 18 may include an input/output device and store the log data in a storage medium via the input/output device. The log data can be used in an apparatus other than the processing device 1 by reading a storage medium storing the log data with an input/output device of this apparatus.

The log data output by the control unit 18 may include discrete time-series values or continuous time-series values. The discrete time-series values may be, for example, values acquired for each predetermined unit of time of processing a workpiece W by the processing unit 14, for each height of a three-dimensional structure ST formed by processing, for each processing layer including at least one processing surface subjected to processing, or for each stage of progress of a processing path.

As a piece of log data, the control unit 18 may output time-series values related to processing from the start of processing a plurality of targets included in a workpiece W to the completion of processing all of the plurality of targets. In this case, the control unit 18 may collectively output all of the time-series values related to processing as log data after the processing is completed, or may sequentially output the time-series values as log data in response to their generation. For example, when the processing device 1 processes a processing surface located at a predetermined height from an installation surface as described above, the log data may include time-series values of processing for each processing layer including a processing surface or for each processing surface. The log data may include a mixture of time-series values related to processing a plurality of targets.

The control unit 18 need not be provided inside the processing device 1. For example, the control unit 18 may be provided as a server or the like outside the processing device 1. In this case, the control unit 18 and the processing device 1 are communicably connected via a wired and/or a wireless communication network (or a data bus and/or a communication line). As a wired communication network, a network using a communication standard conforming to Ethernet (registered trademark) represented by at least one of 10BASE-T, 100BASE-TX, and 1000BASE-T may be used. As a wireless communication network, a communication network using radio waves may be used. Examples of a communication network using radio waves include a communication standard conforming to IEEE802.11 (e.g., wireless LAN) and Bluetooth (registered trademark). The wireless communication network may be an infrared communication network or an optical communication network. As a wired data bus, a serial bus-type data bus represented by at least one of IEEE1394, RS-232, RS-422, RS-423, RS-485, and USB may be used. As a wired data bus, a parallel bus-type data bus may be used. As a wired communication line, an optical network may be used. As a wireless communication line, a wide-area wireless communication network, such as "4G" or "5G," may be used.

The control unit 18 provided outside the processing device 1 is configured to be capable of transmitting information such as commands and control parameters to the processing device 1 via the communication network. The processing device 1 may include a reception unit capable of receiving information such as commands and control parameters from the control unit 18 via the communication network. The processing device 1 may include a transmitter that transmits information such as commands and control parameters to the control unit 18 via the communication network (i.e., an output device that outputs information to the control unit 18). Alternatively, a first control unit that performs part of the process performed by the control unit 18 may be provided inside the processing device 1, and a second control unit that performs another part of the process performed by the control unit 18 may be provided outside the processing device 1.

The control unit 18 may implement a computational model that can be constructed by machine learning. A computational model can be implemented by a computing device executing a predetermined computer program. An example of a computational model that can be constructed by machine learning is a computational model including a neural network, i.e., "artificial intelligence (AI)." In this case, training a computational model may include learning the parameters of a neural network (e.g., at least one of weights and biases). The control unit 18 may control the operation of the processing device 1 with a computational model. In other words, the operation of controlling the operation of the processing device 1 may include an operation of controlling the operation of the processing device 1 with a computational model. The control unit 18 may implement a computational model that has been constructed by offline machine learning with training data. The computational model implemented in the control unit 18 may be updated by online machine learning in the control unit 18. Alternatively, the control unit 18 may control the operation of the processing device 1, using a computational model implemented in a device external to the control unit 18 (i.e., a device provided outside the processing device 1), in addition to or instead of the computational model implemented in the control unit 18.

As a storage medium that stores a computer program executed by the control unit 18 may be used at least one of an optical disk such as CD-ROM, CD-R, CD-RW, DVD-ROM, DVD-RAM, DVD-R, DVD+R, DVD-RW, DVD+RW, and Blu-ray (registered trademark), a magneto-optical disk such as MO, a magnetic medium such as a flexible disk (floppy disk) or a magnetic tape, a semiconductor memory such as a USB memory, and other non-transitory computer-readable media. The storage media may include a device capable of storing a computer program (e.g., a general-purpose device or a special-purpose device implementing a computer program in an executable state in the form of at least one of software and firmware). In addition, each process and function included in a computer program may be achieved by a logical processing block implemented in the control unit 18 by the control unit 18 (i.e., a computer) executing the computer program, or may be achieved by hardware included in the control unit 18, such as a predetermined gate array, e.g., a field programmable gate array (FPGA) or an application specific integrated circuit (ASIC), or achieved in the form of a mixture of logical processing blocks and partial hardware modules implementing some elements of hardware.

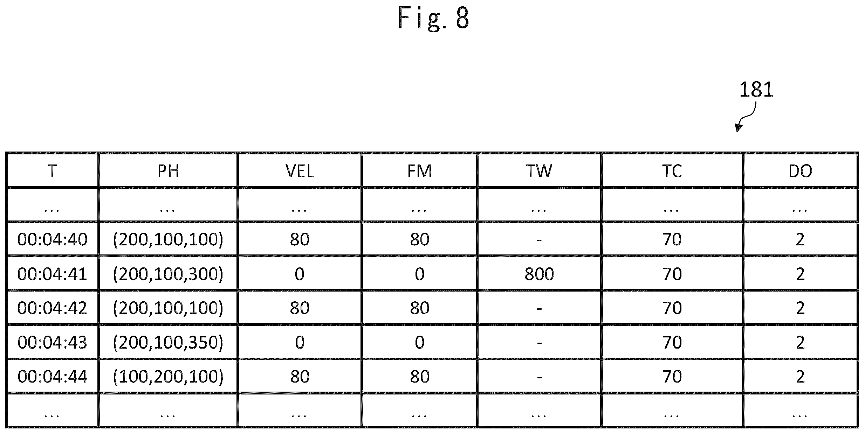

FIG. 8 illustrates an example of time-series values included in log data. Log data output by the control unit 18 may include time-series values represented in Table 181. The log data may be tabular data or data in another format such as text data or binary data.

Table 181 shows (time-series) values at respective times T of head position PH representing the three-dimensional position of the processing head 141, the amount of beams VEL representing the amount of processing light EL radiated onto a workpiece W from the irradiation optical system 1411 of the processing head 141, material flow rate FM representing the amount of the forming material M supplied per unit time from the material nozzle 1412 of the processing head, workpiece temperature TW representing the temperature of the target irradiation area EA of the workpiece W, chamber temperature TC representing a temperature inside the chamber space 1A, and oxygen concentration DO representing an oxygen concentration inside the chamber space 1A.

The head position PH is an example of a value representing at least one of the position and movement of the processing head 141 relative to a workpiece W. The head position PH may include a position (X- and Y-values) on a plane parallel to the stage 151 (i.e., an installation surface) on which a workpiece W is installed at processing and a distance from a reference position of the workpiece W in a direction perpendicular to the installation surface (calculated from a processing head height, Z-value). The position of the processing head 141 on a plane parallel to the installation surface may also be referred to as a processing head position. The amount of movement of the processing head 141 on a plane parallel to the installation surface can be determined by calculating the difference between the head positions PH at a certain time and the immediately previous time. The amount of movement of the processing head 141 may be included in log data.

In the example of Table 181, the workpiece temperature TW is measured with the processing head 141 moved higher (toward the +Z side) than at processing. Thus the workpiece temperature TW at processing (times T=00:04:40, 00:04:42, 00:04:44) is not included in Table 181. The height of the processing head 141 (Z-value of the head position PH) at time T=00:04:41 when the workpiece temperature TW is measured is 300, which is greater than the height of the processing head at processing, 100.

In the example of Table 181, the position on the plane of the processing head 141 (X- and Y-values of the head position PH) at times T=00:04:40-00:04:43 differs from the position on the plane of the processing head 141 at time T=00:04:44. This suggests that the target of processing indicated by the time-series values corresponding to times T=00:04:40-00:04:43 in Table 181 differs from the target of processing indicated by the time-series value corresponding to time T=00:04:44. In the example of Table 181, when changing the position on the plane of the processing head 141, the processing head 141 moves upward (toward the +Z side). Thus, at time T=00:04:43 when the position on the plane of the processing head 141 is changed, the height of the processing head 141 (Z-value of the head position PH) is 350, which is greater than the height of the processing head at processing, 100. In the example of Table 181, the height to which the processing head 141 is moved to change the position on the plane of the processing head 141 is greater (closer to the +Z side) than the height to which the processing head 141 is moved to measure the workpiece temperature TW. The processing device 1 may interrupt processing of the workpiece W when the workpiece temperature TW exceeds a predetermined temperature threshold. In addition, the processing device 1 may resume processing the workpiece W when the workpiece temperature TW falls below the temperature threshold.

Table 181 is an example of time-series values included in log data, which may include other time-series values. For example, the log data may include information on what is supplied for processing from the processing head 141 included in the processing device 1. For example, the log data may include at least one of information on the forming material M, information on the spot size of processing light EL, and information on the flow rate of a pumping gas supplied from the material nozzle together with the forming material M. If a head sensor 1413 is provided separately from the processing head 141, the log data may further include the position of the head sensor 1413.

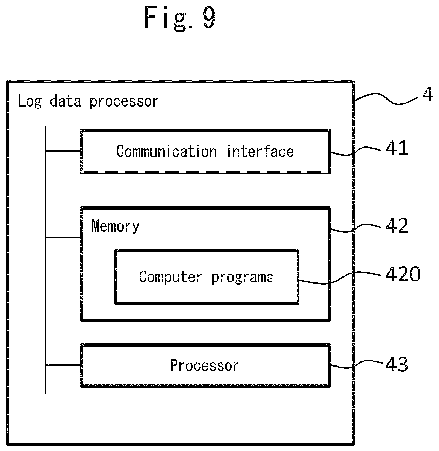

FIG. 9 schematically illustrates the general configuration of the log data processor 4. The log data processor 4 enables identification of first partial log data corresponding to processing a first target among a plurality of targets in the processing device 1 and second partial log data related to processing a second target among the plurality of targets from log data related to processing the plurality of targets. The log data processor 4 is a computer including a communication interface 41, a memory 42, and a processor 43.

The communication interface 41 is an example of a communication unit, and includes an interface circuit for receiving data to be processed by the log data processor 4 or outputting data processed by the log data processor 4. The communication interface 41 includes, for example, a communication interface circuit for connecting the log data processor 4 to the communication network NW.

The memory 42 is an example of a storage unit, and includes volatile and nonvolatile semiconductor memories. The memory 42 stores various data used in processing by the processor 43, e.g., log data acquired from the processing device 1. The memory 42 also stores various computer programs 420, such as a computer program for processing log data, which is a program for executing a log data process. The computer programs 420 provide logic and routines that enable the processes described below to be executed.

The processor 43 is an example of a control unit, and includes one or more processors and their peripheral circuits. The processor 43 may further include another operating circuit, such as a logic unit, an arithmetic unit, or a graphics processing unit. The processor 43 may also be referred to as a processing circuit. The processor 43 executes the computer programs 420 stored in the memory 42, causing the log data processor 4 to execute various processes described in the present embodiment. This may result in logical functional blocks for executing operations to be performed by the log data processor 4 being implemented in the processor 43. In this way, the processor 43 can function as a controller for implementing logical functional blocks for executing operations to be performed by the log data processor 4. In this case, any device (typically, a computer) that executes the computer programs 420 can function as the log data processor 4. At least one of the memory 42 and the processor 43 may be referred to as a control circuit (or a circuit).

From the log data, the processor 43 enables identification of first partial log data related to processing a first target and second partial log data related to processing a second target. The log data is data including time-series values related to at least one of the processing device 1 that processes a plurality of targets in sequence and the plurality of targets to be processed. The first and second targets are included in the plurality of targets; the second target is different from the first target. "Enabling identification" herein includes enabling a user of the log data processor 4 to identify log data related to the first and second targets. In other words, the identification may be performed by a user of the log data processor 4 without being performed by the log data processor 4. Performing a process that enables identification includes setting a separator between the first and second partial log data from the log data. Setting a separator includes identifying a piece of preparatory partial log data from the log data. Enabling identification may be inseparable from identification.

It can also be said that the time-series values included in the log data are time-series measurement results obtained using a measuring instrument including a sensor. It can also be said that the time-series values included in the log data are time-series monitoring results obtained using a monitoring device including a sensor.

The processor 43 may identify pieces of processing partial log data corresponding to processing any of a plurality of targets from the log data. At this time, the processor 43 need not identify the correspondence between the pieces of processing partial log data and the plurality of targets. In this case, a user of the log data processor 4 can identify first partial log data related to processing a first target and second partial log data related to processing a second target, for example, based on comparison between details of processing each of the plurality of targets and details of the identified pieces of processing partial log data.

The processor 43 may identify at least one piece of preparatory partial log data corresponding to a preparatory operation for processing each target from the log data. In this case, the log data is divided into at least two pieces of processing partial log data by the identified at least one piece of preparatory partial log data. The at least one piece of preparatory partial log data and the at least two pieces of processing partial log data are an example of pieces of partial log data. An identification unit 431 enables identification of the at least two pieces of processing partial log data as the first or second partial log data. More specifically, by the processor 43 identifying at least two pieces of processing partial log data, a user of the log data processor 4 may identify one of the at least two pieces of processing partial log data as the first partial log data and another of the at least two pieces of processing partial log data as the second partial log data.

The processor 43 may enable identification of the first and second partial log data from a portion of the log data corresponding to a time at which a condition related to at least one of the processing device 1 and the targets satisfies a first condition. The first condition may include a condition related to at least one of the amount of processing by the processing device 1, movement of the processing head 141 of the processing device 1, and a processing time.

The amount of processing by the processing device 1 can be represented by at least one of the amount of beams VEL and the material flow rate FM. For example, the processor 43 can determine that the amount of processing by the processing device 1 is not 0, i.e., processing is being performed, when the amount of beams VEL corresponds to an amount of light less than a predetermined amount-of-light threshold (e.g., 1).

The processor 43 may enable identification of the first and second partial log data from the log data, based on a processing head position related to a position on a plane parallel to the installation surface on which a workpiece W is installed among the head positions PH. For example, the processor 43 may enable identification of log data at the time when the processing head position is included in a preparatory region corresponding to a preparatory operation for processing as the preparatory partial log data. Further, the processor 43 may enable identification of pieces of log data at the times when the processing head position is included in first and second regions corresponding to the first and second targets as the first and second partial log data, respectively.

The movement of the processing head 141 of the processing device 1 can be represented by the head positions PH. The log data may include an amount of movement of the processing head related to an amount of movement on the plane parallel to the installation surface. The processor 43 may enable identification of the first and second partial log data from the log data, based on the amount of movement of the processing head. For example, the processor 43 may enable identification of log data at the time when the amount of movement of the processing head is greater than a predetermined movement threshold as the preparatory partial log data. Further, the processor 43 may enable identification of one of at least two pieces of processing partial log data separated by the preparatory partial log data identified based on the amount of movement of the processing head as the first partial log data, and another one as the second partial log data.

The head position PH may include a processing head height related to the distance from a reference position of the workpiece W in a direction perpendicular to the installation surface on which the workpiece W is placed (Z-axis direction). For example, the processor 43 may enable identification of log data at the time when the processing head height exceeds a predetermined height threshold as preparatory time log data corresponding to the time when the processing device 1 is acquiring a value of the head sensor 1413 or moving the processing head 141 from one target to another target and when no processing is being performed.

The processing time can be represented as the time T at which at least one of the amount of beams VEL and the material flow rate FM satisfies a predetermined condition. For example, the identification unit 431 can determine that the time when the amount of beams VEL corresponds to an amount of light less than a predetermined amount-of-light threshold (e.g., 1) is a processing time when the amount of processing by the processing device 1 is not 0, i.e., when processing is being performed.

The processor 43 can identify preparatory partial log data from a portion of the log data corresponding to a time at which a first condition corresponding to a preparatory operation for processing each target in the processing device 1 is satisfied, and identify processing partial log data separated by the preparatory partial log data. Alternatively, the processor 43 can identify processing partial log data from a portion of the log data corresponding to a time at which a first condition corresponding to a processing operation on each target in the processing device 1 is satisfied.

The log data may include time-series values of processing for each processing layer or for each processing surface. From this log data, the processor 43 may enable identification of partial log data in which the time-series values of the processing layers or the processing surfaces are collected for each target.

In general, processing such as additive processing and subtractive processing is performed with a plurality of targets housed in the processing device 1. At this time, the targets are held by holders SM and placed in the processing device 1 on a holder-by-holder basis.

In this case, log data related to processing in the processing device 1 may be acquired only for each workpiece including the plurality of targets, i.e., may not be acquired for each target.

For example, when processing control information is output on a workpiece-by-workpiece basis, log data based on the processing control information may also be on a workpiece-by-workpiece basis. For example, if processing control information cannot be input for each target because of the performance of the control unit 18 of the processing device 1, log data may not be acquired for each target. When multiple targets are processed in the order of a first target, a second target, a third target, the first target, and the like, log data may be acquired only on a workpiece-by-workpiece basis.

The log data may include, first, second, third, and fourth element data in chronological order. The first and third element data may be processing partial log data related to processing a first target. The second and fourth element data may be processing partial log data related to processing a second target. In other words, such log data may correspond to processing performed in the order of the first target, the second target, the first target, and the second target. The processing layers or the processing surfaces in the first processing of the first and second targets may differ from those in the second processing.

The processor 43 may enable identification of the first partial log data by combining the first and third element data of such log data. Further, the processor 43 may enable identification of the second partial log data by combining the second and fourth element data of this log data. The processor 43 may enable identification of the first partial log data, based on processing control information. In this case, the processing control information may be information for processing the first target, the second target, the first target, and the second target in this order.

The log data may include first log data that is time-series values about a first attribute related to processing and second log data that is time-series values about a second attribute related to processing and different from the first attribute. The first attribute may represent, for example, at least one of the position and movement of the processing head 141 relative to the workpiece W. The second attribute may be, for example, at least one of a value related to processing light EL, a value related to the forming material M, a value related to the workpiece W such as the temperature of targets of the workpiece W, and a value related to the gas inside the chamber space 1A. The identification unit 431 may enable identification of the first and second partial log data from the second log data, based on the first log data.

The log data may include first and second partial log data related to processing a workpiece W1 (first target) gripped by the holder SM11 and a workpiece W2 (second target) gripped by the holder SM12 on the stage 151 of the processing device 1, and include processing partial log data related to processing workpieces different from the workpieces W1 and W2 and gripped by the holders SM11 and SM12 after completion of processing the workpieces W1 and W2 (third and fourth targets, respectively). The processor 43 may enable identification of third partial log data related to processing the third target and fourth partial log data related to processing the fourth target from a portion of such log data different from a portion from which the first and second partial log data are identified.

The log data may be data sequentially output in response to generation of time-series values in the processing device 1. In this case, the processor 43 may output a first portion of the data related to processing a first target and a second portion of the data related to processing a second target as first and second partial log data, respectively.

The log data may be time-series values related to at least one of a processing device that processes a plurality of targets held by a holder in sequence and the plurality of targets to be processed.

The processor 43 associates at least one of the identified pieces of partial log data with any of the plurality of targets. The processor 43 associates the first partial log data with the first target, for example, based on comparison between details of processing each of the plurality of targets and details of the identified pieces of processing partial log data. The processor 43 also associates the second partial log data with the second target. In other words, an association unit 432 associates each of the first and second partial log data with any of the plurality of targets.

When the targets included in the workpiece W are portions of respective target objects, the processor 43 may associate at least two pieces of processing partial log data with any of the target objects. For example, when the first target is included in a first target object and the second target is included in a second target object different from the first target object, the processor 43 may associate the first and second partial log data with the first and second target objects, respectively.

The processor 43 records partial log data including the identified first and second partial log data in the memory 42. Recording into the memory 42 may also be referred to as storing or saving in the memory 42.

When recording partial log data in the memory 42, the processor 43 may record the partial log data in association with any of the plurality of targets. For example, the processor 43 may record the first partial log data in association with the first target, and record the second partial log data in association with the second target.

When the log data includes discrete time-series values, the processor 43 can store the first partial log data as discrete time-series values in association with the first target, and store the second partial log data in association with the second target. When the log data includes continuous time-series values, the processor 43 can store the first partial log data as continuous time-series values in association with the first target, and store the second partial log data in association with the second target.

Of the log data, the processor 43 outputs processing partial log data including the first and second partial log data. Output herein may include at least one of recording into a storage medium, output to another device via a communication interface, display on a display, and sound production by a speaker. It can also be said that displaying processing partial log data including the first and second partial log data on a display is outputting processing partial log data including the first and second partial log data so as to be visible. The processor 43 may output the first and second partial log data as well as associate them with the first and second targets, respectively.

The processor 43 may output the first and second partial log data as separated data. The processor 43 may output partial identifying information for identifying each of the first and second partial log data in the log data. The processor 43 may output the partial identifying information included in the log data. Such partial identifying information allows a user of the log data processor 4 to distinguish the first and second partial log data from the log data. The partial identifying information only has to indicate processing partial log data, such as the first and second partial log data, so as to be distinguishable from the other portions. When the output is recording into a storage medium or output to another device via a communication interface, the partial identifying information may be a particular code string indicating a data separator. When the output is display on a display, the partial identifying information may be a particular character or figure indicating a data separator or a color different from that of the other processing partial log data. When the output is sound production by a speaker, the partial identifying information may be a particular sound indicating a data separator.

As well as identifying partial log data from the log data, the processor 43 may output a processing report related to processing each target, based on the identified partial log data.

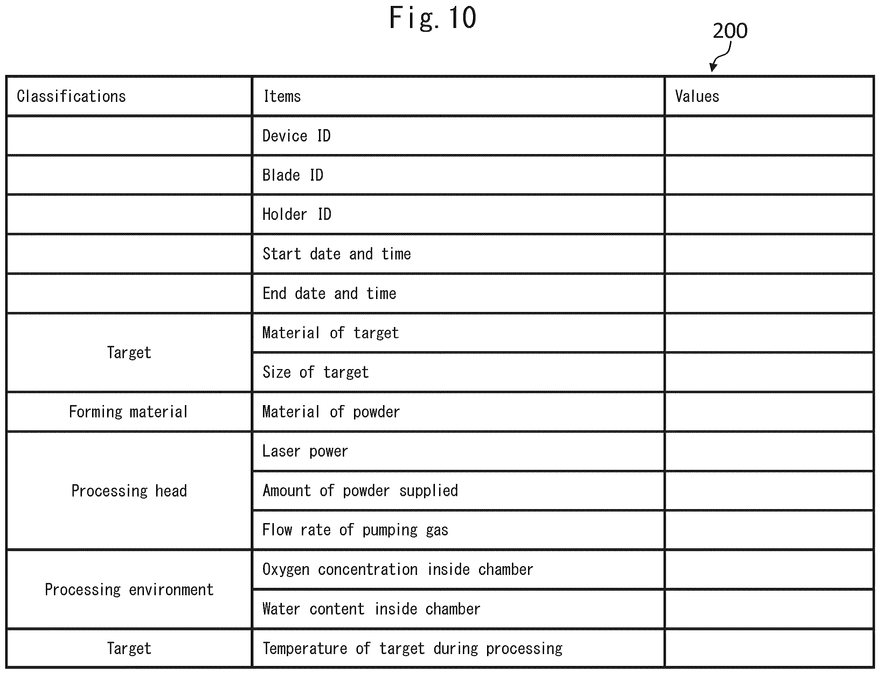

FIG. 10 illustrates an example of information included in a processing report output by the log data processor 4. The processing report may include information shown in Table 200. The processing report may be tabular data, print data for printing a tabular report, or image data.

The processor 43 acquires values corresponding to the items shown in Table 200 from the partial log data identified for each target, and determines the value of each item in the processing report by a process appropriate for each item. For example, the processor 43 may use at least one of statistical representative values, such as the average, maximum, minimum, and median of the amounts of beams VEL included in the partial log data, as the value of laser power in the processing report.

The items shown in Table 200 may be classified, for example, into values related to what is supplied for processing from the processing head 141, values related to processing environment in the processing device, and values related to targets. The values related to targets may be further classified into values related to targets being processed and values related to targets that are not being processed.

The processor 43 may output a processing report for each layer processed in the targets. In this case, the processing report includes layer identifiers as an item. The statistical representative value of the values of each item may be a statistical representative value of each layer.

Identifying a separator for each target and outputting associated data in this way allows for easily outputting information on the conditions under which each target is processed. This information may be referred to as information on quality assurance. In other words, the log data processor 4 can improve the traceability of processing in the processing system 100.

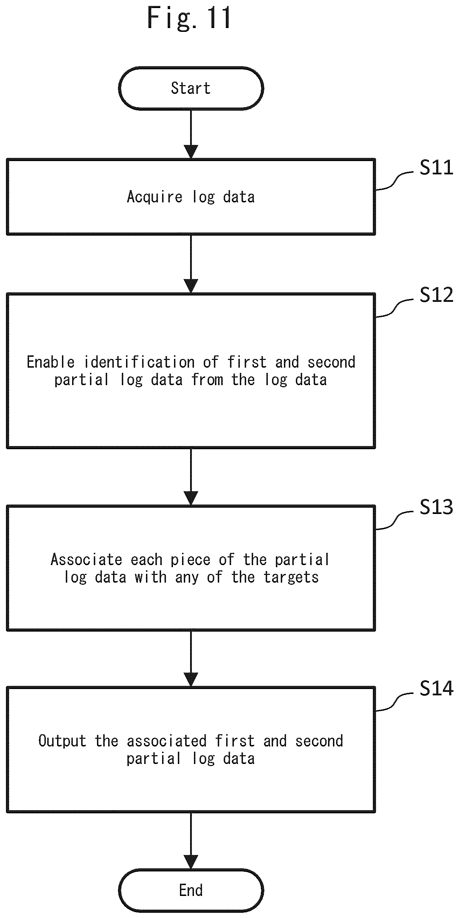

FIG. 11 is a flowchart of a log data process executed by the processor 43 of the log data processor 4. The processor 43 of the log data processor 4 executes a log data process according to the flowchart described below. The log data process may be started, for example, when the processing device 1 starts processing targets. Alternatively, the log data process may be started when a user instructs the processing device 1 to process targets. Alternatively, the log data process may be started when a user issues instructions to acquire log data for each target.

The processor 43 of the log data processor 4 acquires log data (step S11). The log data includes time-series values related to at least one of the processing device 1 that processes a plurality of targets in sequence and the plurality of targets to be processed. The log data is output from the control unit 18 of the processing device 1 included in the processing system 100. The processor 43 may acquire log data by reading log data from a storage medium storing log data output from the control unit 18. Alternatively, the processor 43 may acquire log data by receiving log data transmitted from the control unit 18 via a communication network. The processor 43 may acquire log data during processing of the targets or after completion of the processing.

Next, the processor 43 identifies first and second partial log data from the log data (step S12). The first partial log data relates to processing a first target among the plurality of targets in processing by the processing device 1. The second partial log data relates to processing a second target different from the first target among the plurality of targets. In step S12, the processor 43 may enable identification of the first and second partial log data from the log data. In this case, the flowchart of the log data process may include a step of identifying the first and second partial log data from the log data by the processor 43 or a user of the log data processor 4 subsequent to step S12.

Next, the processor 43 associates the identified first and second partial log data with any of the plurality of targets (step S13).

The processor 43 then outputs the associated first and second partial log data (step S14), and finishes the log data process. Output herein may be output of data for display. The processor 43 may display the output partial log data.

Between steps S13 and S14, the processor 43 may execute a step of recording the associated first and second partial log data.

In the flowchart of the log data process, step S13 can be omitted. The processing corresponding to step S13 may be performed by a user of the log data processor 4.

By executing the log data process in this way, the log data processor 4 enables, from log data related to processing a plurality of targets in the processing device 1, identification of first partial log data corresponding to processing a first target among the plurality of targets and second partial log data related to processing a second target among the plurality of targets. This allows a user of the log data processor 4 to manage processing history for each target even if partial log data of targets included in the plurality of targets is mixed in the log data.

To measure a plurality of targets of a workpiece W housed inside the measurement space, the measuring device 2 may include a measurement sensor (not shown), a measurement stage (not shown), and a measurement control unit (not shown). The measurement sensor measures a plurality of targets of a workpiece W placed on the measurement stage in sequence. The measurement stage may include a holder capable of holding a workpiece W. The measuring device 2 may further include a measurement sensor drive system that moves the measurement sensor under the control of the measurement control unit and a measurement stage drive system that moves the measurement stage under the control of the measurement control unit. The measurement control unit can output measurement log data including time-series values related to at least one of the measuring device 2 and a plurality of targets.

The log data processor 4 may process measurement log data output by the measuring device 2 as log data. More specifically, the log data processor 4 may enable identification of first partial log data related to measuring a first target among the plurality of targets and second partial log data related to measuring a second target different from the first target among the plurality of targets from the measurement log data.

The log data processor 4 that processes measurement log data output by the measuring device 2 as log data may identify pieces of processing partial log data corresponding to processing any of a plurality of targets of processing from the measurement log data.

The log data processor 4 that processes measurement log data output by the measuring device 2 as log data may output first partial log data related to measuring a first target and second partial log data from the measurement log data.

The measuring device 2 may measure a plurality of targets held by a holder in sequence and sequentially output data. Among portions of data sequentially output from the measuring device 2, the log data processor 4 may output a first portion related to measuring a first target and a second portion related to a second target as first and second partial log data, respectively.

The processing system 100 may also be referred to as a measurement system including the measuring device 2 and the log data processor 4. The log data processor 4 need not be included in the processing system 100.

The processing system 100 may perform an operation of molten pool feedback control based on a molten pool image generated by an imaging unit 171, in parallel with the above operation of additive processing. In other words, the processing system 100 may perform an operation of molten pool feedback control in at least part of the period during which the above operation of additive processing is performed. The operation of molten pool feedback control is an operation for controlling the processing unit 14 based on a molten pool image so that the size of a molten pool area MPA in the molten pool image equals a target size. The molten pool area MPA will be described below in detail.

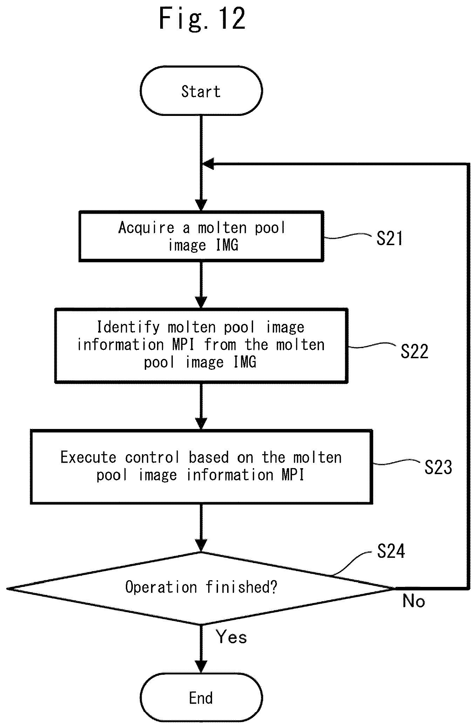

The flow of the operation of molten pool feedback control will be described below with reference to FIG. 12. FIG. 12 is a flowchart showing the flow of the operation of molten pool feedback control.

As shown in FIG. 12, the control unit 18 acquires a molten pool image IMG from the imaging unit 171 (step S21). Specifically, the imaging unit 171 captures an image of a workpiece W or a structural layer SL on which molten pools MP#1 and MP#2 are formed. In other words, the imaging unit 171 captures an image of molten pools MP#1 and MP#2. This results in the imaging unit 171 generating a molten pool image IMG representing the molten pools MP#1 and MP#2. The imaging unit 171 outputs the generated molten pool image IMG to the control unit 18. This results in the control unit 18 acquiring the molten pool image IMG.

The imaging unit 171 captures an image of molten pools MP#1 and MP#2 so that the molten pools MP#1 and MP#2 are included in the capture area of the imaging unit 171. Specifically, the imaging unit 171 may be positioned with respect to a workpiece W or a structural layer SL on which molten pools MP#1 and MP#2 are formed so that the molten pools MP#1 and MP#2 are included in the capture area of the imaging unit 171. The imaging unit 171 may be positioned with respect to the processing head 141 so that molten pools MP#1 and MP#2 formed on a forming surface MS by the processing head 141 are included in the capture area of the imaging unit 171. This allows the imaging unit to capture an image of the molten pools MP#1 and MP#2 appropriately.

The imaging unit 171 may repeatedly capture images of a workpiece W or a structural layer SL on which molten pools MP are formed at a predetermined imaging rate. In other words, the imaging unit may capture an image of a workpiece W or a structural layer SL on which molten pools MP are formed multiple times in succession at a predetermined imaging rate. The imaging rate may be an index indicating the number of times the imaging unit 171 captures an image of a workpiece W or a structural layer SL per unit time (e.g., per second). In other words, the imaging unit 171 may repeatedly capture images of a workpiece W or a structural layer SL every time a predetermined imaging period elapses. For example, the imaging unit 171 may capture an image of a workpiece W or a structural layer SL at a first time, and then capture an image of the workpiece W or the structural layer SL at a second time when a predetermined imaging period has elapsed since the first time. The imaging period may be the reciprocal of the imaging rate. In this case, the imaging unit 171 may generate multiple molten pool images IMG as time-series data. The control unit 18 may acquire the molten pool images IMG as time-series data.

When the imaging unit 171 repeatedly captures images of a workpiece W or a structural layer SL, the imaging unit 171 may be considered to expose an imaging element to light from the workpiece W or the structural layer SL multiple times. In this case, exposing an imaging element multiple times in a single image capture for capturing an image may be referred to as multiple exposures. In other words, the imaging unit 171 may generate molten pool images IMG as time-series data by multiple exposures of the imaging element. In other words, the imaging unit 171 may generate molten pool images IMG as time-series data by multiple exposures to molten pools MP of the imaging element. In other words, the imaging unit 171 may generate molten pool images IMG as a result of multiple exposures by multiple exposures to molten pools MP of the imaging element.

Thereafter, the control unit 18 generates molten pool image information MPI based on the at least one molten pool image IMG acquired in step S21 (step S22). The molten pool image information MPI is information on the molten pools MP#1 and MP#2 represented in the molten pool image IMG.

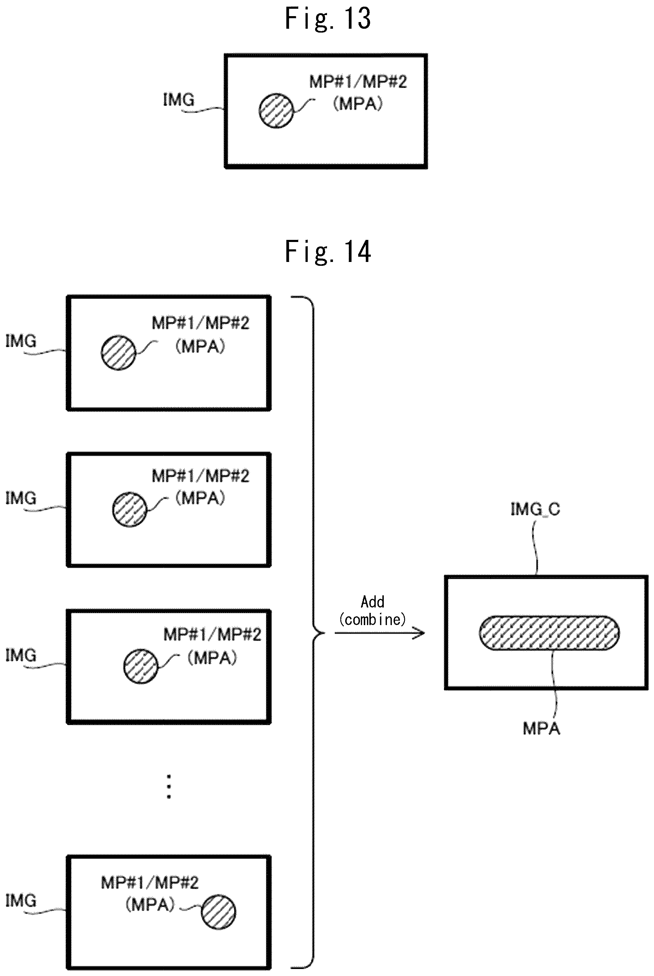

The control unit 18 may generate information on a molten pool area MPA as an example of the molten pool image information MPI. As shown in FIG. 13 showing a molten pool image IMG, the molten pool area MPA may include a region representing the molten pools MP#1 and MP#2 in the molten pool image.

To generate information on a molten pool area MPA, the control unit 18 may use at least two of the molten pool images IMG acquired as time-series data in step S21. In other words, the control unit 18 may generate information on a molten pool area MPA, using molten pool images IMG corresponding to at least some of the molten pool images IMG acquired as time-series data in step S21.

Specifically, the left side of FIG. 14 shows molten pool images IMG acquired as time-series data. As shown on the left side of FIG. 14, when the molten pool MP#1 is moved by irradiation with processing light EL, the position at which the molten pool MP#1 is represented may vary between molten pool images IMG. This is because, when the molten pool MP#1 is moved by irradiation with processing light EL, the imaging unit 171 may capture an image of the molten pool MP#1 formed at a first position on a forming surface MS at a first time, and then capture an image of the molten pool MP#1 formed at a second position on the forming surface MS different from the first position at a second time different from the first time, as described above. In particular, when the exposure time of the imaging unit 171 is shorter than a predetermined time, the position at which the molten pool MP#1 is represented may vary between molten pool images IMG. For the same reason, when the molten pool MP#2 is moved by irradiation with processing light EL, the position at which the molten pool MP#2 is represented may vary between molten pool images IMG.

In this case, to generate information on a molten pool area MPA, the control unit 18 may generate a combined image IMG_C by adding at least two consecutive molten pool images IMG among the molten pool images IMG acquired in step S21, as shown in FIG. 14. In other words, the control unit 18 may generate a combined image IMG_C by combining at least two consecutive molten pool images IMG. A combined image IMG_C may be referred to as a composite image.

Specifically, the control unit 18 may add at least two consecutive molten pool images IMG together on a pixel-by-pixel basis. For example, the control unit 18 may add signal values of at least two consecutive molten pool images IMG together on a pixel-by-pixel basis. An example of a signal value of a molten pool image IMG is a value related to luminance (i.e., a luminance value). The number of molten pool images IMG to be added may be preset, or set by the control unit 18 or a user of the processing system 100 appropriately.

In this case, the combined image IMG_C may be an image such that the signal value of each pixel of the combined image IMG_C is the sum of the signal values of each pixel of the at least two added molten pool images IMG. Specifically, the combined image IMG_C may be an image such that the signal value of the pixel in the x-th row and the y-th column of the combined image IMG_C is the sum of the signal values of the pixels in the x-th row and the y-th column of the at least two added molten pool images IMG. x is a variable indicating an integer greater than or equal to 1 and less than or equal to the total number of pixels in the horizontal direction of each of the combined image IMG_C and the molten pool images IMG. y is a variable indicating an integer greater than or equal to 1 and less than or equal to the total number of pixels in the vertical direction of each of the combined image IMG_C and the molten pool images IMG.

The control unit 18 typically acquires a molten pool image IMG represented by a digital signal from the imaging unit. In this case, the control unit 18 may add molten pool images IMG together by adding digital signals representing the respective molten pool images IMG. For example, the control unit 18 may add molten pool images IMG together by adding digital signals using an adder (i.e., an adder as hardware) that adds input digital signals. For example, the control unit 18 may add molten pool images IMG together by storing digital signals in a buffer and then adding the digital signals stored in the buffer (i.e., adding the digital signals as a software process). Alternatively, the control unit 18 may add molten pool images IMG together by performing predetermined image processing on the molten pool images IMG and then adding digital signals representing the respective molten pool images IMG subjected to the predetermined image processing. An example of the predetermined image processing is at least one of gamma processing, noise reduction processing, and high dynamic range (HDR) processing.

Alternatively, the control unit 18 may acquire a molten pool image IMG represented by an analog signal from the imaging unit. In this case, the control unit 18 may add molten pool images IMG together by adding analog signals representing the respective molten pool images IMG. Alternatively, the control unit 18 may convert the analog signals to digital signals. The control unit 18 may then add the digital signals representing the respective molten pool images IMG to add the molten pool images IMG together, as in the case of acquiring molten pool images IMG represented by digital signals from the imaging unit.

Thereafter, the control unit 18 may detect a molten pool area MPA where the molten pools MP#1 and MP#2 are represented in the combined image IMG_C. Specifically, in a molten pool image IMG, the signal values of a region where a molten pool MP is represented differ from those of a region where no molten pool MP is represented, as shown on the left side of FIG. 14. This is because a molten pool MP emits strong light. Thus, in a molten pool image IMG, the luminance values of a region where a molten pool MP is represented differ from those of a region where no molten pool MP is represented. Typically, in a molten pool image IMG, the luminance values of a region where a molten pool MP is represented are greater than those of a region where no molten pool MP is represented. Thus, in the combined image IMG_C, the signal values of a region where a molten pool MP is represented also differ from those of a region where no molten pool MP is represented, as shown on the right side of FIG. 14. In other words, in the combined image IMG_C, the signal values of a molten pool area MPA differ from those of a region that is not a molten pool area MPA. Typically, the luminance values of a molten pool area MPA are greater than those of a region that is not a molten pool area MPA. Thus the control unit 18 may detect a molten pool area MPA in the combined image IMG_C by comparing the signal value (e.g., luminance value) of each pixel of the combined image IMG_C with a predetermined binarization threshold. For example, the control unit 18 may detect pixels having a signal value (e.g., luminance value) greater than a predetermined binarization threshold in the combined image IMG_C. In other words, the control unit 18 may detect pixels at which the added signal values (e.g., luminance values) are greater than a predetermined binarization threshold in the combined image IMG_C. In this case, the control unit 18 may detect a region including the detected pixels as a molten pool area MPA.

The binarization threshold may be set to an appropriate value that allows a molten pool area MPA and a region that is not a molten pool area MPA to be distinguished based on signal values (e.g., luminance values). The binarization threshold may be preset, or set by the control unit 18 or a user of the processing system 100 appropriately.

The molten pool area MPA detected in the combined image IMG_C may be considered to be substantially equivalent to the region where the molten pools MP#1 and MP#2 have moved. In particular, the molten pool area MPA detected in the combined image IMG_C may be considered to be substantially equivalent to the region where the molten pools MP#1 and MP#2 have moved during the period of capturing the at least two molten pool images IMG used to generate the combined image IMG_C. Thus the molten pool area MPA may mean the region where the molten pools MP#1 and MP#2 have moved.

The molten pool area MPA detected in the combined image IMG_C may be considered to be substantially equivalent to a region where the processing system 100 continuously forms the molten pools MP#1 and MP#2 at different positions. Thus the molten pool area MPA may mean a region where the processing system 100 continuously forms the molten pools MP#1 and MP#2 at different positions.

Thereafter, the control unit 18 may generate information on the molten pool area MPA as molten pool image information MPI, based on the result of detection of the molten pool area MPA. For example, the control unit 18 may generate information on the size of the molten pool area MPA as an example of the information on the molten pool area MPA. As an example, the control unit 18 may calculate the area of the molten pool area MPA and generate information on the calculated area of the molten pool area MPA as the information on the size of the molten pool area MPA. In this case, the control unit 18 may calculate the number of pixels constituting the molten pool area MPA as the area of the molten pool area MPA. In other words, the control unit 18 may calculate the number of pixels having a signal value (e.g., luminance value) greater than the predetermined binarization threshold, based on the combined image IMG_C, to generate the information on the size of the molten pool area MPA.

However, the control unit 18 may generate information on the molten pool area MPA, using a single molten pool image IMG, instead of using multiple molten pool images IMG. Specifically, the control unit 18 may detect a molten pool area MPA in a molten pool image IMG by comparing the signal value (e.g., luminance value) of each pixel of the molten pool image IMG with the predetermined binarization threshold. For example, the control unit 18 may detect pixels having a signal value (e.g., luminance value) greater than a predetermined binarization threshold in a molten pool image IMG. In this case, the control unit 18 may detect a region including the detected pixels as a molten pool area MPA. Thereafter, the control unit 18 may generate information on the molten pool area MPA as molten pool image information MPI, based on the result of detection of the molten pool area MPA.

If the exposure time of the imaging unit is longer than a predetermined time, a molten pool area MPA similar to a molten pool area MPA represented in a combined image IMG_C is likely to be represented in a single molten pool image IMG. For example, if the exposure time of the imaging unit is longer than a predetermined time determined depending on the cycle of periodic movement of the molten pools MP#1 and MP#2, a molten pool area MPA similar to a molten pool area MPA represented in a combined image IMG_C is likely to be represented in a single molten pool image IMG. As an example, if the exposure time of the imaging unit is longer than one cycle of periodic movement of the molten pools MP#1 and MP#2, a molten pool area MPA similar to a molten pool area MPA represented in a combined image IMG_C is likely to be represented in a single molten pool image IMG. Thus, if the exposure time of the imaging unit is longer than a predetermined time, the control unit 18 may generate molten pool image information MPI without using multiple molten pool images IMG. This predetermined time may be the period required for one cycle of periodic movement of the molten pools MP#1 and MP#2, or half or one-third the period required for the one cycle. The control unit 18 may generate molten pool image information MPI, using a single molten pool image IMG representing a molten pool area MPA.

The exposure time of the imaging unit may mean the time during which the imaging element of the imaging unit is exposed to light. For example, if the imaging unit includes a mechanical shutter, the exposure time of the imaging unit may mean the time during which the mechanical shutter is in an open state. In other words, the exposure time of the imaging unit may mean the time from the timing when the state of the mechanical shutter is switched to an open state to the timing when the state of the mechanical shutter is switched to a closed state. The open state may mean a state in which the mechanical shutter is open. The closed state may mean a state in which the mechanical shutter is closed. Alternatively, if the imaging unit includes an electronic shutter, the exposure time of the imaging unit may mean the time during which the electronic shutter is in an ON state. In other words, the exposure time of the imaging unit may mean the time from the timing when the state of the electronic shutter is switched to an ON state to the timing when the state of the electronic shutter is switched to an OFF state. The ON state may mean a state in which the electronic shutter is on. The state in which the electronic shutter is on may mean a state in which each pixel of the imaging element is exposed to light in a single image capture and can accumulate electric charge based on the amount of light.

Alternatively, if the imaging unit includes a mechanical shutter, the imaging unit may open and close the mechanical shutter multiple times at timings synchronized with the above imaging rate. In this case also, the imaging unit may be considered to be performing multiple exposures. The imaging unit may then read out the charge accumulated in each pixel of the imaging element. In this case also, a molten pool area MPA similar to a molten pool area MPA represented in a combined image IMG_C is likely to be represented in a single molten pool image IMG generated by the imaging unit. Thus the control unit 18 may generate molten pool image information MPI, using a single molten pool image IMG representing a molten pool area MPA.

If the imaging unit includes an electronic shutter, the imaging unit may also turn the electronic shutter on and off multiple times at timings synchronized with the above imaging rate. In this case also, the imaging unit may be considered to be performing multiple exposures. The imaging unit may then read out the charge accumulated in each pixel of the imaging element. In this case also, a molten pool area MPA similar to a molten pool area MPA represented in a combined image IMG_C is likely to be represented in a single molten pool image IMG generated by the imaging unit. Thus the control unit 18 may generate molten pool image information MPI, using a single molten pool image IMG representing a molten pool area MPA. However, the imaging unit may read out the charge accumulated in each pixel of the imaging element every time the electronic shutter is turned on and off. In this case, the imaging unit may be considered to substantially generate multiple molten pool images IMG as time-series data.

Referring back to FIG. 12, the control unit 18 then controls the processing system 100, based on the molten pool image information MPI generated in step S22 (step S23). For example, as shown in FIG. 12, the control unit 18 controls the processing system 100, based on the molten pool image information MPI, so that the size of the molten pool area MPA equals a predetermined target size.

As an example, the control unit 18 may control the intensity of processing light emitted by the light source so that the size of the molten pool area MPA equals a predetermined target size. In other words, the control unit 18 may perform DC modulation control for controlling the DC component of the intensity of processing light EL. More specifically, when the intensity of processing light EL changes, the size of the molten pool MP#1 changes. For example, the amount of the forming material M (or the material constituting a forming surface MS) melted by processing light EL increases with the intensity of the processing light EL. Thus the size of the molten pool MP#1 increases with the intensity of processing light EL. When the sizes of the molten pools MP#1 and MP#2 change, the size of the molten pool area MPA represented in a molten pool image IMG or a combined image IMG_C changes.

As another example, the control unit 18 may control a galvanometer mirror included in the irradiation optical system to move the molten pools MP#1 and MP#2 so that the size of the molten pool area MPA equals a predetermined target size. When the range in which the galvanometer mirror moves the molten pool MP#1 changes, the size of the molten pool area MPA represented in a molten pool image IMG or a combined image IMG_C changes. Similarly, when the range in which the galvanometer mirror moves the molten pool MP#2 changes, the size of the molten pool area MPA represented in a molten pool image IMG or a combined image IMG_C changes. Thus the control unit 18 can control the size of the molten pool area MPA by controlling the galvanometer mirror.

The operation of controlling the processing system 100 so that the size of the molten pool area MPA equals a target size may include an operation of controlling the processing system 100 so that the difference between the size of the molten pool area MPA and the target size decreases. In other words, the operation of controlling the processing system 100 so that the size of the molten pool area MPA equals a target size may include an operation of controlling the processing system 100 so that the size of the molten pool area MPA approaches the target size. The operation of controlling the processing system 100 so that the size of the molten pool area MPA equals a target size may include an operation of controlling the processing system 100 so that the difference between the size of the molten pool area MPA and the target size equals zero. In other words, the operation of controlling the processing system 100 so that the size of the molten pool area MPA equals a target size may include an operation of controlling the processing system 100 so that the size of the molten pool area MPA matches the target size. In either case, the control unit 18 may be considered to be performing feedback control of the processing system 100, based on the size of the molten pool area MPA.

As a result, the size of the molten pool area MPA is maintained at the target size. As described above, the molten pool area MPA corresponds to the region where the molten pools MP#1 and MP#2 move. Thus the size of the molten pool area MPA substantially correlates with the sizes of unit areas of processing BSA#1 and BSA#2 where the molten pools MP#1 and MP#2 move, respectively. Thus, when the size of the molten pool area MPA is maintained at the target size, the size of each of the unit areas of processing BSA#1 and BSA#2 is also maintained at a size depending on the target size. As a result, the size (typically, width) of a linear object formed by moving the unit areas of processing BSA#1 and BSA#2 on a forming surface MS is also maintained at a size depending on the target size. This is because the size of a linear object correlates with the sizes of the unit areas of processing BSA#1 and BSA#2. Thus the processing system 100 can form a linear object having a desired size (typically, a desired width) by the operation of molten pool feedback control. In other words, the operation of molten pool feedback control reduces the possibility that the processing system 100 erroneously forms a linear object having a size different from a desired size. The processing system 100 can therefore form an object with high forming accuracy.

In the above description, the control unit 18 adds at least two molten pool images IMG together to generate molten pool image information MPI correlating with the sizes of the unit areas of processing BSA#1 and BSA#2. However, the control unit 18 may calculate an index correlating with the sizes of the unit areas of processing BSA#1 and BSA#2 (i.e., the size of the region where the molten pools MP#1 and MP#2 move) from at least two molten pool images IMG without adding the at least two molten pool images IMG together. In this case, the control unit 18 may control the processing system 100 in step S23 of FIG. 12 so that the calculated index equals the above target size (or a value depending on the target size).

As an example, the control unit 18 may calculate the sizes of at least two molten pools MP represented in each of at least two molten pool images IMG. For example, the control unit 18 may calculate the sizes of molten pools MP represented in a first molten pool image IMG, and calculate the sizes of the molten pools MP#1 and MP#2 represented in a second molten pool image IMG different from the first molten pool image IMG. The control unit 18 may then add the calculated sizes of the at least two molten pools MP together. For example, the control unit 18 may add the sizes of the molten pools MP#1 and MP#2 represented in the first molten pool image IMG and the sizes of the molten pools MP#1 and MP#2 represented in the second molten pool image IMG. In this case, the value obtained by adding the sizes of the at least two molten pools MP may be used as an index correlating with the sizes of the unit areas of processing BSA#1 and BSA#2 (i.e., the size of the region where the molten pools MP#1 and MP#2 move).

As another example, the control unit 18 may calculate the positions of at least two molten pools MP represented in each of at least two molten pool images IMG. For example, the control unit 18 may calculate the positions of molten pools MP#1 and MP#2 represented in a first molten pool image IMG, and calculate the positions of the molten pools MP#1 and MP#2 represented in a second molten pool image IMG different from the first molten pool image IMG. The control unit 18 may then calculate the sizes of the unit areas of processing BSA#1 and BSA#2 (i.e., the size of the region where the molten pools MP#1 and MP#2 move), based on the calculated positions of the at least two molten pools MP. For example, since the target irradiation area EA#1 moves periodically along one direction in the unit area of processing BSA#1, the molten pool MP#1 also moves periodically along the one direction, as described above. In this case, the control unit 18 may calculate the positions of both ends in the one direction of the region where the molten pool MP#1 moves, based on the calculated positions of the molten pool MP#1. For example, the control unit 18 may calculate the position at which the coordinate indicating the position of the molten pool MP#1 is maximized and the position at which the coordinate indicating the position of the molten pool MP#1 is minimized as the positions of both ends in the one direction of the region where the molten pool MP#1 moves. The control unit 18 may then calculate the distance between the calculated positions of both ends as an index correlating with the sizes of the unit areas of processing BSA#1 and BSA#2 (i.e., the size of the region where the molten pools MP#1 and MP#2 move). In this case, the control unit 18 may control the processing system 100 in step S23 of FIG. 12 so that the calculated index equals a distance depending on the above target size.

Regarding the above embodiment, the following notes will be further disclosed.

### [Note 1]

A method for processing log data, including
enabling identification of first and second partial log data from log data including time-series values related to at least one of a processing device that processes a plurality of targets in sequence and the plurality of targets to be processed, the first partial log data relating to processing a first target among the plurality of targets and the second partial log data relating to processing a second target different from the first target among the plurality of targets.

### [Note 2]

A method for processing log data, including
identifying pieces of processing partial log data corresponding to processing any of a plurality of targets from log data including time-series values related to at least one of a processing device that processes the plurality of targets in sequence and the plurality of targets to be processed.

### [Note 3]

A method for processing log data, including
outputting first and second partial log data from log data including time-series values related to at least one of a processing device that processes a plurality of targets in sequence and the plurality of targets to be processed, the first partial log data relating to processing a first target among the plurality of targets and the second partial log data relating to processing a second target different from the first target among the plurality of targets.

### [Note 4]

A method for processing log data in a process of data sequentially output from a processing device that processes a plurality of targets held by a holder in sequence,
the method including
outputting a first portion of the data related to processing a first target among the plurality of targets and a second portion of the data related to processing a second target different from the first target among the plurality of targets as first and second partial log data, respectively.

### [Note 5]

A computer program for processing log data, the computer program causing a computer to execute a process including
enabling identification of first and second partial log data from log data including time-series values related to at least one of a processing device that processes a plurality of targets in sequence and the plurality of targets to be processed, the first partial log data relating to processing a first target among the plurality of targets and the second partial log data relating to processing a second target different from the first target among the plurality of targets.

### [Note 6]

A computer program for processing log data, the computer program causing a computer to execute a process including
identifying pieces of processing partial log data corresponding to processing any of a plurality of targets from log data including time-series values related to at least one of a processing device that processes the plurality of targets in sequence and the plurality of targets to be processed.

### [Note 7]

A computer program for processing log data, the computer program causing a computer to execute a process including
outputting first and second partial log data from log data including time-series values related to at least one of a processing device that processes a plurality of targets in sequence and the plurality of targets to be processed, the first partial log data relating to processing a first target among the plurality of targets and the second partial log data relating to processing a second target different from the first target among the plurality of targets.

### [Note 8]

A computer program for processing log data in a process of data sequentially output from a processing device that processes a plurality of targets held by a holder in sequence,
the computer program causing a computer to execute a process including
outputting a first portion of the data related to processing a first target among the plurality of targets and a second portion of the data related to processing a second target different from the first target among the plurality of targets as first and second partial log data, respectively.

### [Note 9]

A log data processor including a processing circuit configured to identify pieces of measurement partial log data corresponding to measuring any of a plurality of targets from log data including time-series values related to at least one of a measuring device that measures the plurality of targets in sequence and the plurality of targets to be measured.

### [Note 10]

A log data processor including a processing circuit configured to output first and second partial log data from log data including time-series values related to at least one of a measuring device that measures a plurality of targets in sequence and the plurality of targets to be measured, the first partial log data relating to measuring a first target among the plurality of targets and the second partial log data relating to measuring a second target different from the first target among the plurality of targets.

### [Note 11]

A log data processor that processes data sequentially output from a measuring device that measures a plurality of targets held by a holder in sequence,
the log data processor including a processing circuit configured to output a first portion of the data related to measuring a first target among the plurality of targets and a second portion of the data related to measuring a second target different from the first target among the plurality of targets as first and second partial log data, respectively.

### [Note 12]

A method for processing log data, including
enabling identification of first and second partial log data from log data including time-series values related to at least one of a measuring device that measures a plurality of targets in sequence and the plurality of targets to be measured, the first partial log data relating to measuring a first target among the plurality of targets and the second partial log data relating to measuring a second target different from the first target among the plurality of targets.

### [Note 13]

A method for processing log data, including
identifying pieces of measurement partial log data corresponding to measuring any of a plurality of targets from log data including time-series values related to at least one of a measuring device that measures the plurality of targets in sequence and the plurality of targets to be measured.

### [Note 14]

A method for processing log data, including
outputting first and second partial log data from log data including time-series values related to at least one of a measuring device that measures a plurality of targets in sequence and the plurality of targets to be measured, the first partial log data relating to measuring a first target among the plurality of targets and the second partial log data relating to measuring a second target different from the first target among the plurality of targets.

### [Note 15]

A method for processing log data in a process of data sequentially output from a measuring device that measures a plurality of targets held by a holder in sequence,
the method including
outputting a first portion of the data related to measuring a first target among the plurality of targets and a second portion of the data related to measuring a second target different from the first target among the plurality of targets as first and second partial log data, respectively.

### [Note 16]

A computer program for processing log data, the computer program causing a computer to execute a process including
enabling identification of first and second partial log data from log data including time-series values related to at least one of a measuring device that measures a plurality of targets in sequence and the plurality of targets to be measured, the first partial log data relating to measuring a first target among the plurality of targets and the second partial log data relating to measuring a second target different from the first target among the plurality of targets.

### [Note 17]

A computer program for processing log data, the computer program causing a computer to execute a process including
identifying pieces of measurement partial log data corresponding to measuring any of a plurality of targets from log data including time-series values related to at least one of a measuring device that measures the plurality of targets in sequence and the plurality of targets to be measured.

### [Note 18]

A computer program for processing log data, the computer program causing a computer to execute a process including
outputting first and second partial log data from log data including time-series values related to at least one of a measuring device that measures a plurality of targets in sequence and the plurality of targets to be measured, the first partial log data relating to measuring a first target among the plurality of targets and the second partial log data relating to measuring a second target different from the first target among the plurality of targets.

### [Note 19]

A computer program for processing log data in a process of data sequentially output from a measuring device that measures a plurality of targets held by a holder in sequence,
the computer program causing a computer to execute a process including
outputting a first portion of the data related to measuring a first target among the plurality of targets and a second portion of the data related to measuring a second target different from the first target among the plurality of targets as first and second partial log data, respectively.

At least some of the constituent elements of the above embodiments can be appropriately combined with at least some of the constituent elements of the above embodiments. Some of the constituent elements of the above embodiments may be omitted. Note that those skilled in the art can make various changes, substitutions, and modifications without departing from the spirit and scope of the present disclosure.

### REFERENCE SIGNS LIST

- 100: processing system
- 1: processing device
- 2: measuring device
- 3: control device
- 4: log data processor

## Claims

1. A log data processor comprising a processing circuit configured to enable identification of first and second partial log data from log data including time-series values related to at least one of a processing device that processes a plurality of targets in sequence and the plurality of targets to be processed, the first partial log data relating to processing a first target among the plurality of targets and the second partial log data relating to processing a second target different from the first target among the plurality of targets.

2. The log data processor according to claim 1, wherein the processing circuit is further configured to associate each of the first and second partial log data with any of the plurality of targets.

3. The log data processor according to claim 2, wherein in the enabling, the processing circuit
identifies at least one piece of preparatory partial log data corresponding to a preparatory operation for processing each target from the log data,
divides the log data into pieces of partial log data including the at least one piece of preparatory partial log data and at least two pieces of processing partial log data separated by the at least one piece of preparatory partial log data, and
enables identification of the at least two pieces of processing partial log data as the first or second partial log data.

4. The log data processor according to any one of claims 1-3, wherein the log data includes discrete time-series values.

5. The log data processor according to any one of claims 1-4, wherein the log data includes continuous time-series values.

6. The log data processor according to any one of claims 1-5, wherein the processing circuit is further configured to record the first partial log data in association with the first target.

7. The log data processor according to any one of claims 1-6, wherein the processing circuit is further configured to record the second partial log data in association with the second target.

8. The log data processor according to claim 6, wherein in the recording, the processing circuit records the first partial log data as discrete time-series values in association with the first target.

9. The log data processor according to claim 6, wherein in the recording, the processing circuit records the first partial log data as continuous time-series values in association with the first target.

10. The log data processor according to claim 7, wherein in the recording, the processing circuit records the second partial log data as discrete time-series values in association with the second target.

11. The log data processor according to claim 7, wherein in the recording, the processing circuit records the second partial log data as continuous time-series values in association with the second target.

12. The log data processor according to any one of claims 6-11, wherein in the recording, the processing circuit records the first partial log data for the case where a condition related to at least one of the processing device and the targets satisfies a first condition, in association with the first target.

13. The log data processor according to claim 12, wherein the first condition includes a condition related to at least one of the amount of processing by the processing device, movement of a processing head of the processing device, and a processing time.

14. The log data processor according to any one of claims 1-13, wherein in the enabling, the processing circuit enables identification of the first and second partial log data from a portion of the log data corresponding to a time at which a condition related to at least one of the processing device and the targets satisfies a first condition.

15. The log data processor according to claim 14, wherein the first condition includes a condition related to at least one of the amount of processing by the processing device, movement of a processing head of the processing device, and a processing time.

16. The log data processor according to claim 15, wherein the processing head includes a sensor for acquiring the time-series values, and
before the sensor acquires the time-series values, the processing head moves in a direction away from a workpiece including the plurality of targets.

17. The log data processor according to claim 16, wherein before processing by the processing head, the processing head moves in a direction toward the workpiece.

18. The log data processor according to claim 15, wherein the processing head includes a sensor for acquiring the time-series values,
when the sensor acquires the time-series values, the processing head is located farther from a workpiece including the plurality of targets than when any of the plurality of targets is processed.

19. The log data processor according to any one of claims 16-18, wherein the processing head is located above the workpiece.

20. The log data processor according to claim 15, wherein a sensor for acquiring the time-series values moves in a direction toward a workpiece including the plurality of targets.

21. The log data processor according to claim 20, wherein before processing by the processing head, the sensor moves in a direction in which the distance between the sensor and the workpiece increases.

22. The log data processor according to claim 20 or 21, wherein the sensor is located above the workpiece.

23. The log data processor according to any one of claims 1-22, wherein the processing device processes a processing surface located at a predetermined height from an installation surface on which a workpiece including the plurality of targets is installed at the processing, and
in the enabling, the processing circuit enables identification of the first and second partial log data from the log data of processing for each processing layer including the processing surface or for each processing surface.

24. The log data processor according to any one of claims 1-23, wherein in the enabling, the processing circuit enables identification of the first and second partial log data from the log data acquired for each processing layer including a processing surface subjected to the processing or for each processing surface.

25. The log data processor according to any one of claims 1-24, wherein as the time-series values, the log data includes values related to a gas in the processing device.

26. The log data processor according to claim 25, wherein the values related to a gas in the processing device include at least one of values related to an oxygen concentration in the processing device and a temperature in the processing device.

27. The log data processor according to any one of claims 1-26, wherein as the time-series values, the log data includes a value representing a characteristic related to processing by irradiation of each of the plurality of targets with a beam.

28. The log data processor according to claim 27, wherein as the value representing a characteristic related to processing by irradiation with a beam, the log data includes a value representing a characteristic related to the beam with which each of the plurality of targets is irradiated.

29. The log data processor according to claim 28, wherein as the value representing a characteristic related to the beam, the log data includes a value representing the amount of the beam with which each of the plurality of targets is irradiated, and
in the enabling, the processing circuit enables identification of the first and second partial log data, based on the amount of the beam.

30. The log data processor according to claim 29, wherein in the enabling, the processing circuit
divides the log data into pieces of partial log data including at least one piece of preparatory partial log data corresponding to the amount of the beam less than a predetermined amount-of-light threshold and at least two pieces of processing partial log data separated by the at least one piece of preparatory partial log data, and
identifies one of the at least two pieces of processing partial log data as the first partial log data and another one as the second partial log data.

31. The log data processor according to any one of claims 1-30, wherein as the time-series values, the log data includes a value representing a characteristic related to processing in which each of the plurality of targets is supplied with a material and irradiated with a beam.

32. The log data processor according to claim 31, wherein as the time-series values, the log data includes information on the material supplied to each of the plurality of targets.

33. The log data processor according to any one of claims 1-32, wherein as the time-series values, the log data includes a value related to what is supplied for the processing from a processing head included in the processing device.

34. The log data processor according to any one of claims 1-33, wherein as the time-series values, the log data includes a value related to environment in the processing device.

35. The log data processor according to any one of claims 1-34, wherein as the time-series values, the log data includes a value related to the targets.

36. The log data processor according to any one of claims 1-35, wherein as the time-series values, the log data includes a value representing at least one of the position and movement of a processing head for processing the plurality of targets relative to the plurality of targets.

37. The log data processor according to claim 36, wherein as the value representing the position of the processing head, the log data includes a value representing at least one of
a position on a plane parallel to an installation surface on which a workpiece including the plurality of targets is installed at the processing,
an amount of movement on the plane parallel to the installation surface, and
a distance from a predetermined reference position of the plurality of targets in a direction perpendicular to the installation surface.

38. The log data processor according to claim 37, wherein as the value representing the position of the processing head, the log data includes a value representing a processing head height related to the distance from the reference position of the plurality of targets in a direction perpendicular to the installation surface on which the workpiece is installed at the processing, and
in the enabling, the processing circuit identifies the first and second partial log data, based on the processing head height.

39. The log data processor according to claim 38, wherein in the enabling, the processing circuit
divides the log data into pieces of partial log data including at least one piece of preparatory partial log data corresponding to the processing head height higher than a predetermined height threshold and at least two pieces of processing partial log data separated by the at least one piece of preparatory partial log data, and
identifies one of the at least two pieces of processing partial log data as the first partial log data and another one as the second partial log data.

40. The log data processor according to claim 38 or 39, wherein as the time-series values, the log data includes a value related to a temperature of the plurality of targets, and
before measurement of the temperature, the processing head moves in a direction away from the workpiece.

41. The log data processor according to any one of claims 38-40, wherein as the value representing the position of the processing head, the log data includes a value representing a processing head position related to a position on a plane parallel to the installation surface on which the targets are installed at the processing, and
in the enabling, the processing circuit enables identification of the first and second partial log data from the log data, based on the processing head position.

42. The log data processor according to claim 41, wherein in the enabling, the processing circuit enables identification of partial log data of the log data corresponding to the processing head position included in a first region as the first partial log data and partial log data of the log data corresponding to the processing head position included in a second region different from the first region as the second partial log data.

43. The log data processor according to any one of claims 37-42, wherein as the value representing the position of the processing head, the log data includes a value representing an amount of movement of the processing head related to an amount of movement on the plane parallel to the installation surface, and
in the enabling, the processing circuit enables identification of the first and second partial log data from the log data, based on the amount of movement of the processing head.

44. The log data processor according to claim 43, wherein in the enabling, the processing circuit
divides the log data into pieces of partial log data including at least one piece of preparatory partial log data corresponding to the amount of movement of the processing head greater than a predetermined movement threshold and at least two pieces of processing partial log data separated by the at least one piece of preparatory partial log data, and
enables identification of one of the at least two pieces of processing partial log data as the first partial log data and another one as the second partial log data.

45. The log data processor according to any one of claims 1-44, wherein the processing circuit performs the identification, based on processing control information for controlling the processing.

46. The log data processor according to claim 45, wherein the processing control information is information for processing the second target after processing the first target.

47. The log data processor according to claim 46, wherein the processing control information is information for further processing the first target after processing the second target.

48. The log data processor according to any one of claims 1-47, wherein the processing circuit performs the identification of the first and second partial log data after completion of processing the first and second targets.

49. The log data processor according to any one of claims 1-48, wherein the processing circuit performs the identification of the first partial log data after processing the first target and before processing the second target.

50. The log data processor according to any one of claims 1-49, wherein the log data includes first, second, third, and fourth element data in chronological order, and
in the enabling, the processing circuit enables identification of the first partial log data by combining the first and third element data.

51. The log data processor according to any one of claims 1-50, wherein
the log data includes first log data that is time-series values about a first attribute related to the processing and second log data that is time-series values about a second attribute related to the processing and different from the first attribute, and
in the enabling, the processing circuit enables identification of the first and second partial log data from the second log data, based on the first log data.

52. The log data processor according to claim 51, wherein the first attribute represents at least one of the position and movement of a processing head for processing the plurality of targets relative to the plurality of targets.

53. The log data processor according to claim 51 or 52, wherein the second attribute represents at least one of a temperature of the plurality of targets and a gas in the processing device.

54. The log data processor according to claim 2, wherein the processing circuit is further configured to output each of the first and second partial log data associated with any of the plurality of targets as separated data.

55. The log data processor according to claim 2 or 54, wherein the processing circuit is further configured to output partial identifying information for identifying, in the log data, each of the first and second partial log data associated with any of the plurality of targets.

56. The log data processor according to claim 55, wherein in the output, the processing circuit outputs the partial identifying information included in the log data.

57. The log data processor according to any one of claims 54-56, wherein in the output, the processing circuit outputs the first and second partial log data so as to be visible.

58. The log data processor according to any one of claims 1-57, wherein the processing is creation of the plurality of targets.

59. The log data processor according to any one of claims 1-58, wherein the processing is repair of the plurality of targets.

60. The log data processor according to any one of claims 1-59, wherein the first target is gripped by a first gripping portion, and the second target is gripped by a second gripping portion different from the first gripping portion.

61. The log data processor according to claim 60, wherein upon completion of processing the first and second targets, a third target different from the first and second targets among the plurality of targets is gripped by the first gripping portion, and a fourth target different from the first, second, and third targets among the plurality of targets is gripped by the second gripping portion, and
in the enabling, the processing circuit enables identification of third partial log data related to processing the third target and fourth partial log data related to processing the fourth target.

62. The log data processor according to claim 61, wherein in the enabling, the processing circuit enables identification of the third and fourth partial log data from a portion of the log data different from a portion from which the first and second partial log data are identified.

63. The log data processor according to claim 62, wherein the first target is included in a first target object, and the second target is included in a second target object different from the first target object, and
the processing circuit is further configured to associate each of the first and second partial log data with the first or second target object.

64. The log data processor according to any one of claims 1-63, wherein the first target is a first portion of a target object including the plurality of targets, and the second target is a second portion of the target object different from the first portion.

65. The log data processor according to claim 64, wherein the first and second portions have the same function.

66. The log data processor according to any one of claims 1-65, wherein the targets are articles of the same type.

67. The log data processor according to claim 66, wherein the articles of the same type are turbine blades.

68. A log data processor comprising a processing circuit configured to identify pieces of processing partial log data corresponding to processing any of a plurality of targets from log data including time-series values related to at least one of a processing device that processes the plurality of targets in sequence and the plurality of targets to be processed.

69. The log data processor according to claim 3, wherein the processing circuit is further configured to associate each of first partial log data and second partial log data different from the first partial log data among the at least two pieces of processing partial log data with any of the plurality of targets.

70. A log data processor comprising a processing circuit configured to output first and second partial log data from log data including time-series values related to at least one of a processing device that processes a plurality of targets in sequence and the plurality of targets to be processed, the first partial log data relating to processing a first target among the plurality of targets and being associated with the first target, and the second partial log data relating to processing a second target different from the first target among the plurality of targets and being associated with the second target.

71. A log data processor that processes data sequentially output from a processing device that processes a plurality of targets held by a holder in sequence,
the log data processor comprising a processing circuit configured to output a first portion of the data related to processing a first target among the plurality of targets and a second portion of the data related to processing a second target different from the first target among the plurality of targets as first and second partial log data, respectively.

72. A log data processor comprising a processing circuit configured to enable identification of first and second partial log data from log data including time-series values related to at least one of a measuring device that measures a plurality of targets in sequence and the plurality of targets to be measured, the first partial log data relating to measuring a first target among the plurality of targets and the second partial log data relating to measuring a second target different from the first target among the plurality of targets.

73. A processing system comprising the processing device and the log data processor according to any one of claims 1-71.

74. A measurement system comprising the measuring device and the log data processor according to claim 72.
